(19) Europäisches Patentamt
European Patent Office
Office européen des brevets

(11) **EP 4 712 665 A1**

(12) **EUROPEAN PATENT APPLICATION**
published in accordance with Art. 153(4) EPC

(43) Date of publication:
**18.03.2026 Bulletin 2026/12**

(21) Application number: **24803623.8**

(22) Date of filing: **25.04.2024**

(51) International Patent Classification (IPC):
*H04W 74/00* (2009.01)     *H04L 1/08* (2006.01)
*H04W 72/0453* (2023.01)    *H04L 5/00* (2006.01)
*H04L 27/26* (2006.01)     *H04W 72/0457* (2023.01)
*H04W 74/0816* (2024.01)

(52) Cooperative Patent Classification (CPC):
**H04L 1/08; H04L 5/00; H04L 27/26;
H04W 72/0453; H04W 72/0457; H04W 74/00;
H04W 74/0816**

(86) International application number:
**PCT/KR2024/005594**

(87) International publication number:
**WO 2024/232568 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2023 KR 20230061119**

(71) Applicant: **LG Electronics Inc.**
**Yeongdeungpo-gu**
**Seoul 07336 (KR)**

(72) Inventors:
• **SHIN, Seokmin**
  **Seoul 06772 (KR)**
• **LEE, Youngdae**
  **Seoul 06772 (KR)**
• **KO, Hyunsoo**
  **Seoul 06772 (KR)**
• **YANG, Suckchel**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR RANDOM ACCESS PROCEDURE**

(57)     A method according to one embodiment of the present disclosure comprises the steps of: receiving a RACH configuration; and transmitting a random access preamble on the basis of an RA-RNTI. The RA-RNTI is determined on the basis of i) a first index related to a time domain of a PRACH occasion and ii) a second index related to a frequency domain of the PRACH occasion. The RACH configuration is based on an additional RACH configuration. The first index or the second index is determined on the basis of the additional RACH configuration.

【FIG. 6】

```
              ┌─────────┐
              │  Start  │
              └─────────┘
                   │
                   ▼
 ┌──────────────────────────────────────────┐
 │      Receive RACH configuration           │──── S610
 └──────────────────────────────────────────┘
                   │
                   ▼
 ┌──────────────────────────────────────────┐
 │ Transmit random access preamble based on  │──── S620
 │              RA-RNTI                       │
 └──────────────────────────────────────────┘
                   │
                   ▼
              ┌─────────┐
              │   End   │
              └─────────┘
```

EP 4 712 665 A1

**Description**

[Technical Field]

The present disclosure relates to a method and an apparatus for a random access procedure.

[Background Art]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

For Rel-18 coverage enhancement, PRACH repetition transmission has been introduced. In this case, an RACH resource for single PRACH transmission and an RACH resource for multiple PRACH transmission can be configured independently. In this case, when both the RACH resources are configured at a same time instance, RA-RNTI value collision can occur. According to a legacy scheme, an RA-RNTI can be calculated based on i) an index of a PRACH occasion in a frequency domain and ii) a first OFDM symbol index of the PRACH occasion.

[Disclosure]

[Technical Problem]

An object of the present disclosure is to provide a method for solving a problem of collision of RA-RNTIs.

The technical objects of the present disclosure are not limited to the aforementioned technical objects, and other technical objects, which are not mentioned above, will be apparently appreciated by a person having ordinary skill in the art from the following description.

[Technical Solution]

A method performed by a user equipment (UE) according to one embodiment of the present disclosure includes: receiving a Random Access CHannel (RACH) configuration; and transmitting a random access preamble based on a Random Access (RA)-Radio Network Temporary Identifier (RNTI).

The RA-RNTI is determined based on i) a first index related to a time domain of a Physical Random Access CHannel (PRACH) occasion, and ii) a second index related to a frequency domain of the PRACH occasion.

The RACH configuration is based on an additional RACH configuration. The first index or the second index is determined based on the additional RACH configuration.

The first index may be related to an Orthogonal Frequency Division Multiplexing (OFDM) symbol index. The second index may be related to an index of the PRACH occasion in the frequency domain.

The additional RACH configuration may include information for an offset.

The second index may be determined based on (i) the index of the PRACH occasion and (ii) the offset.

The index of the PRACH occasion may be determined based on the offset.

The information for the OFDM symbol index may be configured based on the additional RACH configuration or a System Information Block (SIB).

The OFDM symbol index may be predefined for the additional RACH configuration.

The OFDM symbol index may be based on a defined symbol among symbols based on the PRACH occasion.

The defined symbol may be an N-th symbol or a last symbol among the symbols based on the PRACH occasion.

The PRACH occasion may be a last PRACH occasion among PRACH occasions based on a repetition number.

The method may further include receiving Downlink Control Information (DCI) related to a Random Access Response (RAR). A Cyclic Redundancy Check (CRC) related to the DCI may be scrambled by the RA-RNTI.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions are configured to allow the one or mre processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station according to another embodiment of the present disclosure includes: transmitting a Random Access CHannel (RACH) configuration; and receiving a random access preamble based on a Random Access (RA)-Radio Network Temporary Identifier (RNTI).

The RA-RNTI is determined based on i) a first index related to a time domain of a Physical Random Access CHannel (PRACH) occasion, and ii) a second index related to a frequency domain of the PRACH occasion.

The RACH configuration is based on an additional RACH configuration. The first index or the second index is determined based on the additional RACH configuration.

A base station according to another embodiment of the present disclosure comprises one or more transceivers, one or more processors, and one or more memories connected to the one or more processors and storing instructions.

The instructions configure the one or more processors to perform all steps of the methods based on being executed by the one or more processors.

[Advantageous Effects]

According to one embodiment of the present specification, it is possible to prevent RA-RNTIs from being calculated as the same value in RACH procedures based on different feature combinations (feature combinations including/not including an MSG1 repetition feature).

Furthermore, since Cyclic Redundancy Check (CRC) related to RARs based on different RACH procedures is scrambled based on a same RA-RNTI, it is possible to prevent a case where an RAR related to a specific RACH procedure is not properly received. Therefore, reliability of RACH procedures performed based on various feature combinations can be ensured.

An effect which can be obtained in the present disclosure are not limited to the aforementioned effect and other unmentioned advantages will be clearly understood by those skilled in the art from the following description.

[Description of Drawings]

FIG. 1 illustrates physical channels and general signal transmission used in a 3GPP system.

FIG. 2 illustrates RACH occasions for each preamble format.

FIG. 3 illustrates a random access procedure.

FIG. 4 is a diagram illustrating a case where RA-RNTIs overlap.

FIG. 5 is a diagram illustrating f_id for calculation of the RA-RNTI according to one embodiment of the present disclosure.

FIG. 6 is a flowchart for describing a method performed by a user equipment (UE) according to one embodiment of the present disclosure.

FIG. 7 is a flowchart for describing a method performed by a base station (BS) according to another embodiment of the present disclosure.

FIG. 8 illustrates configurations of a first device and a second device according to one embodiment of the present disclosure.

[Mode for Invention]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Physical Channel and General Signal Transmission

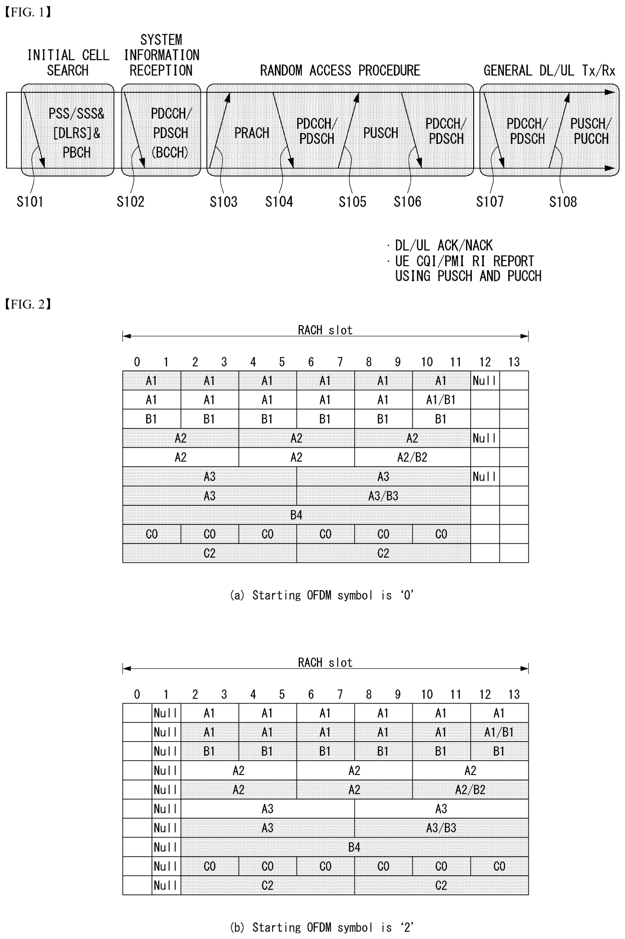

FIG. 1 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S101). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. The UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S102).

When there is no radio resource first accessing the eNB or for signal transmission, the UE may perform a Random Access Procedure (RACH) to the eNB (S103 to S106). To this end, the UE may transmit a specific sequence to a preamble through a Physical Random Access Channel (PRACH) (S103 and S105) and receive a response message (Random Access Response (RAR) message) for the preamble through the PDCCH and a corresponding PDSCH. In the case of a contention based RACH, a Contention Resolution Procedure may be additionally performed (S106).

The UE that performs the above procedure may then perform PDCCH/PDSCH reception (S107) and Physical Uplink Shared Channel (PUSCH)/Physical Uplink Control Channel (PUCCH) transmission (S108) as a general uplink/-downlink signal transmission procedure. In particular, the UE may receive Downlink Control Information (DCI) through the PDCCH. Here, the DCI may include control information such as resource allocation information for the UE and formats may be differently applied according to a use purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

An RACH slot is described below.

An RACH slot includes one or multiple RACH Occasion(s).

Slot duration is 1 ms for {1.25 kHz, 5 kHz} subcarrier spacing, and has scalable duration (i.e., 1 ms, 0.5 ms, 0.25 ms, 0.125 ms) for {15 kHz, 30 kHz, 60 kHz, 120 kHz} subcarrier spacing.

A start OFDM symbol index in an RACH slot has {0,2,x} values for short preamble formats.

FIG. 2 illustrates RACH occasions for each preamble format.

Referring to FIG. 2, an RACH slot may include one or more RACH occasions (ROs) for each preamble format (e.g., A1, A2, ..., C2). (a) of FIG. 2 illustrates a case in which a starting OFDM symbol is '0', and (b) of FIG. 2 illustrates a case in which a starting OFDM symbol is '2'.

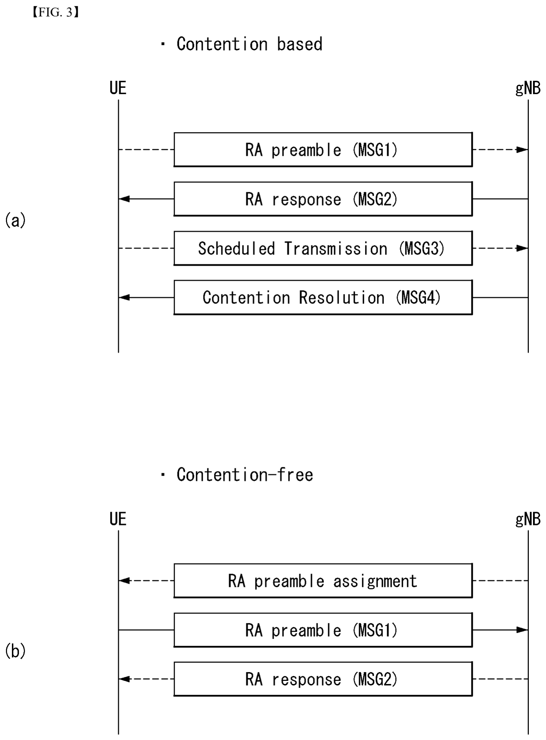

FIG. 3 illustrates a random access procedure.

(a) of FIG. 3 illustrates a contention based RACH procedure, and (b) of FIG. 3 illustrates a contention free RACH procedure.

MSG1 transmission is described below.

Subcarrier spacing for MSG1 is configured in an RACH configuration, and is provided in a handover command with respect to a contention-free RA procedure for handover.

Preamble indices for contention-based random access (CBRA) and contention-free random access (CFRA) are consecutively mapped to one SSB in one RACH transmission occasion.

- CBRA: Association between an SS block (SSB) within an SS burst set and a subset of RACH resources and/or preamble indices is configured by a parameter set in an RMSI.
- CFRA: A UE may be configured transmit multi-MSG1s through a dedicated multi-RACH transmission occasion in the time domain before the end of a monitored RAR window.

Furthermore, association between a CFRA preamble and an SSB is reconfigured through UE-specific RRC.

The random access procedure may be a Type-1 random access procedure (4-step RA) or a Type-2 random access procedure (2-step RA).

The Type-1 random access procedure may include transmission of random access preamble in a physical random access channel (PRACH) (Msg1), reception of a random access response (RAR) (Msg2), transmission of PUSCH scheduled by UL grant of the RAR (Msg3), and PDSCH for contention resolution (Msg4). If the random access procedure is contention free random access (CFRA), the Msg3 transmission and the Msg4 reception are omitted.

The Type-2 random access procedure may include transmission of random access preamble and PUSCH (MsgA) and RAR reception (MsgB).

The following Table 1 shows configurations/operations related to the random access preamble.

【Table 1】

8.1       Random access preamble

Physical random access procedure for a UE is triggered upon request of a PRACH transmission by higher layers or by a PDCCH order for a cell. A configuration by higher layers for a PRACH transmission includes the following:

-          A configuration for PRACH transmission on the cell [4, TS 38.211].

-          A preamble index, a preamble SCS, $P_{PRACH,target}$, a corresponding RA-RNTI when applicable [11, TS 38.321], and a PRACH resource for the cell.

-          A number of $N_{preamble}^{rep} > 1$ preamble repetitions for the PRACH transmission if the UE would transmit the PRACH with repetitions.

A UE transmits a PRACH on a cell using the selected PRACH format with transmission power $P_{PRACH,b,f,c}(i)$, as described in clause 7.4, on the indicated PRACH resource or on a determined set of $N_{preamble}^{rep}$ resources using a same spatial filter in case of $N_{preamble}^{rep}$ preamble repetitions.

For Type-1 random access procedure, a UE is provided a number $N$ of SS/PBCH block indexes associated with one PRACH occasion and a number $R$ of contention based preambles per SS/PBCH block index per valid PRACH occasion by *ssb-perRACH-OccasionAndCB-PreamblesPerSSB*.

For Type-2 random access procedure with common configuration of PRACH occasions with Type-1 random access procedure, a UE is provided a number $N$ of SS/PBCH block indexes associated with one PRACH occasion by *ssb-perRACH-OccasionAndCB-PreamblesPerSSB* and a number $Q$ of contention based preambles per SS/PBCH block index per valid PRACH occasion by *msgA-CB-PreamblesPerSSB-PerSharedRO*. The PRACH transmission can be on a subset of PRACH occasions associated with a same SS/PBCH block index within an SSB-RO mapping cycle for a UE provided with a PRACH mask index by *msgA-SSB-SharedRO-MaskIndex* according to [11, TS 38.321].

For Type-2 random access procedure with separate configuration of PRACH occasions with Type-1 random access procedure, a UE is provided a number $N$ of SS/PBCH block indexes associated with one PRACH occasion and a number $R$ of contention based preambles per SS/PBCH block index per valid PRACH occasion by *msgA-SSB-PerRACH-OccasionAndCB-PreamblesPerSSB* when provided; otherwise, by *ssb-perRACH-OccasionAndCB-PreamblesPerSSB*.

For a random access procedure associated with a feature combination indicated by *FeatureCombinationPreambles*, a UE is provided a number $N$ of SS/PBCH block indexes associated with one PRACH occasion by *ssb-perRACH-OccasionAndCB-PreamblesPerSSB* or *msgA-SSB-PerRACH-OccasionAndCB-PreamblesPerSSB* when provided and a number $S$ of contention based preambles per SS/PBCH block index per valid PRACH occasion by *startPreambleForThisPartition* and *numberOfPreamblesPerSSB-ForThisPartition*. The PRACH transmission can be on a subset of PRACH occasions associated with a same SS/PBCH block index within an SSB-RO mapping cycle for a UE provided with a PRACH mask index by *ssb-SharedRO-MaskIndex* according to [11, TS 38.321].

For Type-1 random access procedure, or for Type-2 random access procedure with separate configuration of PRACH occasions from Type 1 random access procedure, if $N < 1$, one SS/PBCH block index is mapped to $1/N$ consecutive valid PRACH occasions and $R$ contention

---

based preambles with consecutive indexes associated with the SS/PBCH block index per valid PRACH occasion start from preamble index 0. If $N \geq 1$, $R$ contention based preambles with consecutive indexes associated with SS/PBCH block index $n$, $0 \leq n \leq N - 1$, per valid PRACH occasion start from preamble index $n \cdot N_{preamble}^{total}/N$ where $N_{preamble}^{total}$ is provided by *totalNumberOfRA-Preambles* for Type-1 random

access procedure, or by *msgA-TotalNumberOfRA-Preambles* for Type-2 random access procedure with separate configuration of PRACH occasions from a Type 1 random access procedure, and is an integer multiple of $N$.

For Type-2 random access procedure with common configuration of PRACH occasions with Type-1 random access procedure, if $N < 1$, one SS/PBCH block index is mapped to $1/N$ consecutive valid PRACH occasions and $Q$ contention based preambles with consecutive indexes associated with the SS/PBCH block index per valid PRACH occasion start from preamble index $R$. If $N \geq 1$, $Q$ contention based preambles with consecutive indexes associated with SS/PBCH block index $n$, $0 \leq n \leq N - 1$, per valid PRACH occasion start from preamble index $n \cdot N_{preamble}^{total}/N + R$, where $N_{preamble}^{total}$ is provided by *totalNumberOfRA-Preambles* for Type-1 random access procedure.

For link recovery, a UE is provided $N$ SS/PBCH block indexes associated with one PRACH occasion by *ssb-perRACH-Occasion* in *BeamFailureRecoveryConfig*. For a dedicated RACH configuration provided by *RACH-ConfigDedicated*, if *cfra* is provided, a UE is provided $N$ SS/PBCH block indexes associated with one PRACH occasion by *ssb-perRACH-Occasion* in *occasions*. If $N < 1$, one SS/PBCH block index is mapped to $1/N$ consecutive valid PRACH occasions. If $N \geq 1$, all consecutive $N$ SS/PBCH block indexes are associated with one PRACH occasion.

SS/PBCH block indexes provided by *ssb-PositionsInBurst* in *SIB1* or in *ServingCellConfigCommon* are mapped to valid PRACH occasions in the following order where the parameters are described in [4, TS 38.211].

-      First, in increasing order of preamble indexes within a single PRACH occasion
-      Second, in increasing order of frequency resource indexes for frequency multiplexed PRACH occasions
-      Third, in increasing order of time resource indexes for time multiplexed PRACH occasions within a PRACH slot
-      Fourth, in increasing order of indexes for PRACH slots

An association period, starting from frame 0, for mapping SS/PBCH block indexes to PRACH occasions is the smallest integer number in the set determined by the PRACH configuration period according Table 8.1-1 such that $N_{Tx}^{SSB}$ SS/PBCH block indexes are mapped at least once to the PRACH occasions within the association period, where a UE obtains $N_{Tx}^{SSB}$ from the value of *ssb-PositionsInBurst* in *SIB1* or in *ServingCellConfigCommon*. If after an integer number of SS/PBCH block indexes to PRACH occasions mapping cycles within the association period there is a set of PRACH occasions or PRACH preambles that are not mapped to $N_{Tx}^{SSB}$ SS/PBCH block indexes, no SS/PBCH block indexes are mapped to the set of PRACH occasions or PRACH preambles. An association pattern period includes one or more association periods and is determined so that a pattern between PRACH occasions and SS/PBCH block indexes repeats at most every 160 msec.

PRACH occasions not associated with SS/PBCH block indexes after an integer number of association periods, if any, are not used for PRACH transmissions.

For a PRACH transmission by a UE triggered by a PDCCH order, the PRACH mask index field, if the value of the random access preamble index field is not zero, indicates the PRACH occasion for the PRACH transmission where the PRACH occasions are associated with the SS/PBCH block index indicated by the SS/PBCH block index field of the PDCCH order and, if any, a cell indicator field indicates a cell for the PRACH transmission [5, TS 38.212]. If the UE is provided $K_{cell,offset}$ by *cellSpecificKoffset*, the PRACH occasion is after slot $n + 2^\mu \cdot K_{cell,offset}$ where $n$ is the slot of the UL BWP for the PRACH transmission

that overlaps with the end of the PDCCH order reception assuming $T_{TA} = 0$, and $\mu$ is the SCS configuration for the PRACH transmission. If the PDCCH reception for the PDCCH order includes two PDCCH candidates from two linked search space sets based on *searchSpaceLinkingId*, as described in clause 10.1, the last symbol of the PDCCH reception is the last symbol of the PDCCH candidate that ends later. The PDCCH reception includes the two PDCCH candidates also when the UE is not required to monitor one of the two PDCCH candidates as described in clauses 10 (except clause 10.4), 11.1, 11.1.1 and 17.2.

For a PRACH transmission triggered by higher layers, if *ssb-ResourceList* is provided, the PRACH mask index is indicated by *ra-ssb-OccasionMaskIndex* which indicates the PRACH occasions for the PRACH transmission where the PRACH occasions are associated with the selected SS/PBCH block index.

The PRACH occasions are mapped consecutively per corresponding SS/PBCH block index. The indexing of the PRACH occasion indicated by the mask index value is reset per mapping cycle of consecutive PRACH occasions per SS/PBCH block index. The UE selects for a PRACH transmission the PRACH occasion indicated by PRACH mask index value for the indicated SS/PBCH block index in the first available mapping cycle.

For the indicated preamble index, the ordering of the PRACH occasions is

- First, in increasing order of frequency resource indexes for frequency multiplexed PRACH occasions

- Second, in increasing order of time resource indexes for time multiplexed PRACH occasions within a PRACH slot

- Third, in increasing order of indexes for PRACH slots

For a PRACH transmission with $N_{preamble}^{rep}$ preamble repetitions, a set consists of $N_{preamble}^{rep}$ valid PRACH occasions that are consecutive in time, use same frequency resources, and are associated with same one or more SS/PBCH block index(es), and each SS/PBCH block index is associated with same preamble indexes in all valid PRACH occasions within the set.

For a PRACH transmission with preamble repetitions, a time period, starting from frame 0, is the smallest integer number of association pattern periods such that at least one set of valid PRACH occasions for each of the $N_{Tx}^{SSB}$ SS/PBCH block indexes can be determined within the time period for all configured number of preamble repetitions. The set(s) of valid PRACH occasions for each configured number of preamble repetitions repeats every time period.

---

Within a time period, for set(s) of $N_{preamble}^{rep}$ valid PRACH occasions for a PRACH transmission with $N_{preamble}^{rep}$ preamble repetitions

- the first valid PRACH occasion of the first set is the first valid PRACH occasion

- the first valid PRACH occasion of subsequent sets, if any, is determined according to an ordering of valid PRACH occasions

- first, in increasing order of frequency resource indexes for frequency multiplexed PRACH occasions

- second, in increasing order of time resource indexes for time multiplexed PRACH occasions

where, for each frequency resource index for frequency multiplexed PRACH occasions

- the first valid PRACH occasion of the first set is the first valid PRACH occasion

- the first valid PRACH occasion of subsequent sets, if any,

- is after *TimeOffsetBetweenStartingRO* consecutive valid PRACH occasions in time from the first valid PRACH occasion of the previous set, where each PRACH occasion is associated with same SS/PBCH block index(es) and each SS/PBCH block index is associated with same preambles, if *TimeOffsetBetweenStartingRO* is provided

- is after the PRACH occasions for the previous set, if *TimeOffsetBetweenStartingRO* is not provided

For a PRACH transmission triggered upon request by higher layers, a value of *ra-OccasionList* [12, TS 38.331], if *csirs-ResourceList* is provided, indicates a list of PRACH occasions for the PRACH transmission where the PRACH occasions are associated with the selected CSI-RS index indicated by *csi-RS*. The indexing of the PRACH occasions indicated by *ra-OccasionList* is reset per association pattern period.

**Table 8.1-1: Mapping between PRACH configuration period and SS/PBCH block to PRACH occasion association period**

| PRACH configuration period (msec) | Association period (number of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

For paired spectrum or supplementary uplink band all PRACH occasions are valid.

For unpaired spectrum,

- if a UE is not provided tdd-UL-DL-ConfigurationCommon, a PRACH occasion in a PRACH slot is valid if it does not precede a SS/PBCH block in the PRACH slot and starts at least $N_{gap}$ symbols after a last SS/PBCH block reception symbol, where $N_{gap}$ is

provided in Table 8.1-2 and, if *channelAccessMode* = "*semiStatic*" is provided, does not overlap with a set of consecutive symbols before the start of a next channel occupancy time where the UE does not transmit [15, TS 37.213].

- the candidate SS/PBCH block index of the SS/PBCH block corresponds to the SS/PBCH block index provided by *ssb-PositionsInBurst* in *SIB1* or in *ServingCellConfigCommon*, as described in clause 4.1

- *If a UE is provided tdd-UL-DL-ConfigurationCommon, a PRACH occasion in a PRACH slot is valid if*

- it is within UL symbols, or

- it does not precede a SS/PBCH block in the PRACH slot and starts at least $N_{gap}$ symbols after a last downlink symbol and at least $N_{gap}$ symbols after a last SS/PBCH block symbol, where $N_{gap}$ is provided in Table 8.1-2, and if *channelAccessMode* = "*semiStatic*" is provided, does not overlap with a set of consecutive symbols before the start of a next channel occupancy time where there shall not be any transmissions, as described in [15, TS 37.213]

- the candidate SS/PBCH block index of the SS/PBCH block corresponds to the SS/PBCH block index provided by *ssb-PositionsInBurst* in *SIB1* or in *ServingCellConfigCommon*, as described in clause 4.1.

For preamble format B4 [4, TS 38.211], $N_{gap} = 0$.

**Table 8.1-2: $N_{gap}$ values for different preamble SCS $\mu$**

| Preamble SCS | $N_{gap}$ |
|---|---|
| 1.25 kHz or 5 kHz | 0 |
| 15 kHz or 30 kHz or 60 kHz or 120 kHz | 2 |
| 480 kHz | 8 |
| 960 kHz | 16 |

If a random access procedure is initiated by a PDCCH order, the UE, if requested by higher layers, transmits a PRACH in the selected PRACH occasion, as described in [11, TS 38.321], for which a time between the last symbol of the PDCCH order reception and the first symbol of the PRACH transmission is larger than or equal to $N_{T,2} + T_{BWPswitchDelay} + \Delta_{Delay} + T_{switch} + T_{SSB} + \Delta_{RF/BB \; preparation}$ msec, where

- $N_{T,2}$ is a time duration of $N_2$ symbols corresponding to a PUSCH preparation time for UE processing capability 1 [6, TS 38.214] assuming $\mu$ corresponds to the smallest SCS configuration between the SCS configuration of the PDCCH order and the SCS configuration of the corresponding PRACH transmission

- $T_{BWPswitchDelay} = 0$ if the active UL BWP does not change, or if a cell indicator field in the PDCCH order indicates a non-serving cell [5, TS 38.212], and $T_{BWPswitchDelay}$ is defined in [10, TS 38.133] otherwise

- $\Delta_{Delay} = 0.5$ msec for FR1 and $\Delta_{Delay} = 0.25$ msec for FR2

- $T_{switch}$ is a switching gap duration as defined in [6, TS 38.214]

- $T_{SSB} = 0$ if a cell indicator field in the PDCCH order indicates a serving cell or if cell indicator field is not present, and $T_{SSB}$ is defined in [10, TS 38.133] otherwise

- $\Delta_{RF/BB \; preparation} = 0$ if a cell indicator field in the PDCCH order indicates a serving cell or if cell indicator field is not present, and $\Delta_{RF/BB \; preparation}$ is defined in [10, TS 38.133] otherwise

For a PRACH transmission using 1.25 kHz or 5 kHz SCS, the UE determines $N_2$ assuming SCS configuration $\mu = 0$.

For single cell operation or for operation with contiguous carrier aggregation in a same frequency band or for operation with non-contiguous carrier aggregation in a same frequency band if the UE is not provided with *intraBandNC-PRACH-simulTx-r17*, a UE

- does not transmit PRACH and PUSCH/PUCCH/SRS in a same slot with respect to the smallest SCS configuration between the SCS configuration for the UL BWP with the PRACH and the SCS configuration for the UL BWP with the PUSCH/PUCCH/SRS transmissions,

- does not transmit PRACH and PUSCH/PUCCH/SRS when a first or last symbol of a PRACH transmission in a first slot is separated by less than $N$ symbols from the last or first symbol, respectively, of a PUSCH/PUCCH/SRS transmission in a second slot

- for a PRACH transmission with $N_{preamble}^{rep} > 1$ preamble repetitions, if the UE does not indicate *capability-XYZ*, the UE does not transmit a first repetition of the PRACH and a second repetition of the PRACH when a first or last symbol of the first repetition of the PRACH in a first slot is separated by less than $N$ symbols from the last or first symbol, respectively, of the second repetition of the PRACH in a second slot; otherwise, the UE transmits the first repetition of the PRACH and the second repetition of the PRACH where $N = 2$ for $\mu = 0$ or $\mu = 1$, $N = 4$ for $\mu = 2$ or $\mu = 3$, $N = 16$ for $\mu = 5$, $N = 32$ for $\mu = 6$, and $\mu$ is the smallest SCS configuration between the SCS configuration for the UL BWP with the PRACH and the SCS configuration for the UL BWP with the PUSCH/PUCCH/SRS transmissions. For a PUSCH transmission with repetition Type B, this applies to each actual repetition for PUSCH transmission [6, TS 38.214].

The configurations/definitions/operations according to Table 1 above may be referred to in order to clarify definitions/operations of embodiments to be described below. As an example, in one embodiment to be described below, ROs may refer to the valid PRACH occasions mentioned in Table 1. As an example, in one embodiment to be described below, multiple ROs having a same beam index may mean 1/N (where, N < 1) consecutive valid PRACH occasions to which one SS/PBCH index is mapped.

Tables 2 to 4 below illustrate PRACH configuration tables to which the embodiments to be described below may be applied.

【Table 2】

Table 6.3.3.2-2: Random access configurations for FR1 and paired spectrum/supplementary uplink.

| PRACH Configuration index | Preamble format | $n_{SFN} \bmod x$ | | Subframe number | Starting symbol | Number of PRACH slots within a subframe | $N^{RAslot}$, number of time-domain PRACH ccasions within a PRACH slot | $N^{RA}_{dur}$, PRACH duration |
|---|---|---|---|---|---|---|---|---|
| | | x | y | | | | | |
| 0 | 0 | 16 | 1 | 1 | 0 | - | - | 0 |
| 1 | 0 | 16 | 1 | 4 | 0 | - | - | 0 |
| 2 | 0 | 16 | 1 | 7 | 0 | - | - | 0 |
| 3 | 0 | 16 | 1 | 9 | 0 | - | - | 0 |
| 4 | 0 | 8 | 1 | 1 | 0 | - | - | 0 |
| 5 | 0 | 8 | 1 | 4 | 0 | - | - | 0 |
| 6 | 0 | 8 | 1 | 7 | 0 | - | - | 0 |
| 7 | 0 | 8 | 1 | 9 | 0 | - | - | 0 |
| 8 | 0 | 4 | 1 | 1 | 0 | - | - | 0 |
| 9 | 0 | 4 | 1 | 4 | 0 | - | - | 0 |
| 10 | 0 | 4 | 1 | 7 | 0 | - | - | 0 |
| 11 | 0 | 4 | 1 | 9 | 0 | - | - | 0 |
| 12 | 0 | 2 | 1 | 1 | 0 | - | - | 0 |
| 13 | 0 | 2 | 1 | 4 | 0 | - | - | 0 |
| 14 | 0 | 2 | 1 | 7 | 0 | - | - | 0 |
| 15 | 0 | 2 | 1 | 9 | 0 | - | - | 0 |
| 16 | 0 | 1 | 0 | 1 | 0 | - | - | 0 |
| 17 | 0 | 1 | 0 | 4 | 0 | - | - | 0 |
| 18 | 0 | 1 | 0 | 7 | 0 | - | - | 0 |
| 19 | 0 | 1 | 0 | 1,6 | 0 | - | - | 0 |
| 20 | 0 | 1 | 0 | 2,7 | 0 | - | - | 0 |
| 21 | 0 | 1 | 0 | 3,8 | 0 | - | - | 0 |
| 22 | 0 | 1 | 0 | 1,4,7 | 0 | - | - | 0 |
| 23 | 0 | 1 | 0 | 2,5,8 | 0 | - | - | 0 |
| 24 | 0 | 1 | 0 | 3, 6, 9 | 0 | - | - | 0 |
| 25 | 0 | 1 | 0 | 0,2,4,6,8 | 0 | - | - | 0 |
| 26 | 0 | 1 | 0 | 1,3,5,7,9 | 0 | - | - | 0 |

| | | | | | | | | |
|---|---|---|---|---|---|---|---|---|
| 27 | 0 | 1 | 0 | 0,1,2,3,4,5,6,7,8,9 | 0 | - | - | 0 |
| 28 | 1 | 16 | 1 | 1 | 0 | - | - | 0 |
| 29 | 1 | 16 | 1 | 4 | 0 | - | - | 0 |
| 30 | 1 | 16 | 1 | 7 | 0 | - | - | 0 |
| 31 | 1 | 16 | 1 | 9 | 0 | - | - | 0 |
| 32 | 1 | 8 | 1 | 1 | 0 | - | - | 0 |
| 33 | 1 | 8 | 1 | 4 | 0 | - | - | 0 |
| 34 | 1 | 8 | 1 | 7 | 0 | - | - | 0 |
| 35 | 1 | 8 | 1 | 9 | 0 | - | - | 0 |
| 36 | 1 | 4 | 1 | 1 | 0 | - | - | 0 |
| 37 | 1 | 4 | 1 | 4 | 0 | - | - | 0 |
| 38 | 1 | 4 | 1 | 7 | 0 | - | - | 0 |
| 39 | 1 | 4 | 1 | 9 | 0 | - | - | 0 |
| 40 | 1 | 2 | 1 | 1 | 0 | - | - | 0 |
| 41 | 1 | 2 | 1 | 4 | 0 | - | - | 0 |
| 42 | 1 | 2 | 1 | 7 | 0 | - | - | 0 |
| 43 | 1 | 2 | 1 | 9 | 0 | - | - | 0 |
| 44 | 1 | 1 | 0 | 1 | 0 | - | - | 0 |
| 45 | 1 | 1 | 0 | 4 | 0 | - | - | 0 |
| 46 | 1 | 1 | 0 | 7 | 0 | - | - | 0 |
| 47 | 1 | 1 | 0 | 1,6 | 0 | - | - | 0 |
| 48 | 1 | 1 | 0 | 2,7 | 0 | - | - | 0 |

| | | | | | | | | |
|---|---|---|---|---|---|---|---|---|
| 49 | 1 | 1 | 0 | 3,8 | 0 | - | - | 0 |
| 50 | 1 | 1 | 0 | 1,4,7 | 0 | - | - | 0 |
| 51 | 1 | 1 | 0 | 2,5,8 | 0 | - | - | 0 |
| 52 | 1 | 1 | 0 | 3,6,9 | 0 | - | - | 0 |
| 53 | 2 | 16 | 1 | 1 | 0 | - | - | 0 |
| 54 | 2 | 8 | 1 | 1 | 0 | - | - | 0 |
| 55 | 2 | 4 | 0 | 1 | 0 | - | - | 0 |
| 56 | 2 | 2 | 0 | 1 | 0 | - | - | 0 |
| 57 | 2 | 2 | 0 | 5 | 0 | - | - | 0 |
| 58 | 2 | 1 | 0 | 1 | 0 | - | - | 0 |
| 59 | 2 | 1 | 0 | 5 | 0 | - | - | 0 |
| 60 | 3 | 16 | 1 | 1 | 0 | - | - | 0 |
| 61 | 3 | 16 | 1 | 4 | 0 | - | - | 0 |
| 62 | 3 | 16 | 1 | 7 | 0 | - | - | 0 |
| 63 | 3 | 16 | 1 | 9 | 0 | - | - | 0 |

| 64 | 3 | 8 | 1 | 1 | 0 | - | - | 0 |
|---|---|---|---|---|---|---|---|---|
| 65 | 3 | 8 | 1 | 4 | 0 | - | - | 0 |
| 66 | 3 | 8 | 1 | 7 | 0 | - | - | 0 |
| 67 | 3 | 4 | 1 | 1 | 0 | - | - | 0 |
| 68 | 3 | 4 | 1 | 4 | 0 | - | - | 0 |
| 69 | 3 | 4 | 1 | 7 | 0 | - | - | 0 |
| 70 | 3 | 4 | 1 | 9 | 0 | - | - | 0 |
| 71 | 3 | 2 | 1 | 1 | 0 | - | - | 0 |
| 72 | 3 | 2 | 1 | 4 | 0 | - | - | 0 |
| 73 | 3 | 2 | 1 | 7 | 0 | - | - | 0 |
| 74 | 3 | 2 | 1 | 9 | 0 | - | - | 0 |
| 75 | 3 | 1 | 0 | 1 | 0 | - | - | 0 |
| 76 | 3 | 1 | 0 | 4 | 0 | - | - | 0 |
| 77 | 3 | 1 | 0 | 7 | 0 | - | - | 0 |
| 78 | 3 | 1 | 0 | 1,6 | 0 | - | - | 0 |
| 79 | 3 | 1 | 0 | 2,7 | 0 | - | - | 0 |
| 80 | 3 | 1 | 0 | 3,8 | 0 | - | - | 0 |

| 81 | 3 | 1 | 0 | 1,4,7 | 0 | - | - | 0 |
|---|---|---|---|---|---|---|---|---|
| 82 | 3 | 1 | 0 | 2,5,8 | 0 | - | - | 0 |
| 83 | 3 | 1 | 0 | 3, 6, 9 | 0 | - | - | 0 |
| 84 | 3 | 1 | 0 | 0,2,4,6,8 | 0 | - | - | 0 |
| 85 | 3 | 1 | 0 | 1,3,5,7,9 | 0 | - | - | 0 |
| 86 | 3 | 1 | 0 | 0,1,2,3,4, 5,6,7,8,9 | 0 | - | - | 0 |
| 87 | A1 | 16 | 0 | 4,9 | 0 | 1 | 6 | 2 |
| 88 | A1 | 16 | 1 | 4 | 0 | 2 | 6 | 2 |
| 89 | A1 | 8 | 0 | 4,9 | 0 | 1 | 6 | 2 |
| 90 | A1 | 8 | 1 | 4 | 0 | 2 | 6 | 2 |
| 91 | A1 | 4 | 0 | 4,9 | 0 | 1 | 6 | 2 |
| 92 | A1 | 4 | 1 | 4,9 | 0 | 1 | 6 | 2 |
| 93 | A1 | 4 | 0 | 4 | 0 | 2 | 6 | 2 |
| 94 | A1 | 2 | 0 | 4,9 | 0 | 1 | 6 | 2 |
| 95 | A1 | 2 | 0 | 1 | 0 | 2 | 6 | 2 |
| 96 | A1 | 2 | 0 | 4 | 0 | 2 | 6 | 2 |
| 97 | A1 | 2 | 0 | 7 | 0 | 2 | 6 | 2 |
| 98 | A1 | 1 | 0 | 4 | 0 | 1 | 6 | 2 |
| 99 | A1 | 1 | 0 | 1,6 | 0 | 1 | 6 | 2 |
| 100 | A1 | 1 | 0 | 4,9 | 0 | 1 | 6 | 2 |

| | | | | | | | |
|---|---|---|---|---|---|---|---|
| 101 | A1 | 1 | 0 | 1 | 0 | 2 | 6 | 2 |
| 102 | A1 | 1 | 0 | 7 | 0 | 2 | 6 | 2 |
| 103 | A1 | 1 | 0 | 2,7 | 0 | 2 | 6 | 2 |
| 104 | A1 | 1 | 0 | 1,4,7 | 0 | 2 | 6 | 2 |
| 105 | A1 | 1 | 0 | 0,2,4,6,8 | 0 | 2 | 6 | 2 |
| 106 | A1 | 1 | 0 | 0,1,2,3,4, 5,6,7,8,9 | 0 | 2 | 6 | 2 |
| 107 | A1 | 1 | 0 | 1,3,5,7,9 | 0 | 2 | 6 | 2 |
| 108 | A1/B1 | 2 | 0 | 4,9 | 0 | 1 | 7 | 2 |
| 109 | A1/B1 | 2 | 0 | 4 | 0 | 2 | 7 | 2 |
| 110 | A1/B1 | 1 | 0 | 4 | 0 | 1 | 7 | 2 |
| 111 | A1/B1 | 1 | 0 | 1,6 | 0 | 1 | 7 | 2 |

| | | | | | | | |
|---|---|---|---|---|---|---|---|
| 112 | A1/B1 | 1 | 0 | 4,9 | 0 | 1 | 7 | 2 |
| 113 | A1/B1 | 1 | 0 | 1 | 0 | 2 | 7 | 2 |
| 114 | A1/B1 | 1 | 0 | 7 | 0 | 2 | 7 | 2 |
| 115 | A1/B1 | 1 | 0 | 1,4,7 | 0 | 2 | 7 | 2 |
| 116 | A1/B1 | 1 | 0 | 0,2,4,6,8 | 0 | 2 | 7 | 2 |
| 117 | A2 | 16 | 1 | 2,6,9 | 0 | 1 | 3 | 4 |
| 118 | A2 | 16 | 1 | 4 | 0 | 2 | 3 | 4 |
| 119 | A2 | 8 | 1 | 2,6,9 | 0 | 1 | 3 | 4 |
| 120 | A2 | 8 | 1 | 4 | 0 | 2 | 3 | 4 |
| 121 | A2 | 4 | 0 | 2,6,9 | 0 | 1 | 3 | 4 |
| 122 | A2 | 4 | 0 | 4 | 0 | 2 | 3 | 4 |
| 123 | A2 | 2 | 1 | 2,6,9 | 0 | 1 | 3 | 4 |
| 124 | A2 | 2 | 0 | 1 | 0 | 2 | 3 | 4 |
| 125 | A2 | 2 | 0 | 4 | 0 | 2 | 3 | 4 |
| 126 | A2 | 2 | 0 | 7 | 0 | 2 | 3 | 4 |
| 127 | A2 | 1 | 0 | 4 | 0 | 1 | 3 | 4 |
| 128 | A2 | 1 | 0 | 1,6 | 0 | 1 | 3 | 4 |
| 129 | A2 | 1 | 0 | 4,9 | 0 | 1 | 3 | 4 |
| 130 | A2 | 1 | 0 | 1 | 0 | 2 | 3 | 4 |
| 131 | A2 | 1 | 0 | 7 | 0 | 2 | 3 | 4 |
| 132 | A2 | 1 | 0 | 2,7 | 0 | 2 | 3 | 4 |
| 133 | A2 | 1 | 0 | 1,4,7 | 0 | 2 | 3 | 4 |
| 134 | A2 | 1 | 0 | 0,2,4,6,8 | 0 | 2 | 3 | 4 |
| 135 | A2 | 1 | 0 | 0,1,2,3,4, 5,6,7,8,9 | 0 | 2 | 3 | 4 |
| 136 | A2 | 1 | 0 | 1,3,5,7,9 | 0 | 2 | 3 | 4 |
| 137 | A2/B2 | 2 | 1 | 2,6,9 | 0 | 1 | 3 | 4 |

| 138 | A2/B2 | 2 | 0 | 4 | 0 | 2 | 3 | 4 |
|---|---|---|---|---|---|---|---|---|
| 139 | A2/B2 | 1 | 0 | 4 | 0 | 1 | 3 | 4 |
| 140 | A2/B2 | 1 | 0 | 1,6 | 0 | 1 | 3 | 4 |
| 141 | A2/B2 | 1 | 0 | 4,9 | 0 | 1 | 3 | 4 |
| 142 | A2/B2 | 1 | 0 | 1 | 0 | 2 | 3 | 4 |
| 143 | A2/B2 | 1 | 0 | 7 | 0 | 2 | 3 | 4 |

| 144 | A2/B2 | 1 | 0 | 1,4,7 | 0 | 2 | 3 | 4 |
|---|---|---|---|---|---|---|---|---|
| 145 | A2/B2 | 1 | 0 | 0,2,4,6,8 | 0 | 2 | 3 | 4 |
| 146 | A2/B2 | 1 | 0 | 0,1,2,3,4,5,6,7,8,9 | 0 | 2 | 3 | 4 |
| 147 | A3 | 16 | 1 | 4,9 | 0 | 1 | 2 | 6 |
| 148 | A3 | 16 | 1 | 4 | 0 | 2 | 2 | 6 |
| 149 | A3 | 8 | 1 | 4,9 | 0 | 1 | 2 | 6 |
| 150 | A3 | 8 | 1 | 4 | 0 | 2 | 2 | 6 |
| 151 | A3 | 4 | 0 | 4,9 | 0 | 1 | 2 | 6 |
| 152 | A3 | 4 | 0 | 4 | 0 | 2 | 2 | 6 |
| 153 | A3 | 2 | 1 | 2,6,9 | 0 | 2 | 2 | 6 |
| 154 | A3 | 2 | 0 | 1 | 0 | 2 | 2 | 6 |
| 155 | A3 | 2 | 0 | 4 | 0 | 2 | 2 | 6 |
| 156 | A3 | 2 | 0 | 7 | 0 | 2 | 2 | 6 |
| 157 | A3 | 1 | 0 | 4 | 0 | 1 | 2 | 6 |
| 158 | A3 | 1 | 0 | 1,6 | 0 | 1 | 2 | 6 |
| 159 | A3 | 1 | 0 | 4,9 | 0 | 1 | 2 | 6 |
| 160 | A3 | 1 | 0 | 1 | 0 | 2 | 2 | 6 |
| 161 | A3 | 1 | 0 | 7 | 0 | 2 | 2 | 6 |
| 162 | A3 | 1 | 0 | 2,7 | 0 | 2 | 2 | 6 |
| 163 | A3 | 1 | 0 | 1,4,7 | 0 | 2 | 2 | 6 |
| 164 | A3 | 1 | 0 | 0,2,4,6,8 | 0 | 2 | 2 | 6 |
| 165 | A3 | 1 | 0 | 0,1,2,3,4,5,6,7,8,9 | 0 | 2 | 2 | 6 |
| 166 | A3 | 1 | 0 | 1,3,5,7,9 | 0 | 2 | 2 | 6 |
| 167 | A3/B3 | 2 | 1 | 2,6,9 | 0 | 2 | 2 | 6 |
| 168 | A3/B3 | 2 | 0 | 4 | 0 | 2 | 2 | 6 |
| 169 | A3/B3 | 1 | 0 | 4 | 0 | 1 | 2 | 6 |
| 170 | A3/B3 | 1 | 0 | 1,6 | 0 | 1 | 2 | 6 |
| 171 | A3/B3 | 1 | 0 | 4,9 | 0 | 1 | 2 | 6 |
| 172 | A3/B3 | 1 | 0 | 1 | 0 | 2 | 2 | 6 |
| 173 | A3/B3 | 1 | 0 | 7 | 0 | 2 | 2 | 6 |
| 174 | A3/B3 | 1 | 0 | 1,4,7 | 0 | 2 | 2 | 6 |

| 175 | A3/B3 | 1 | 0 | 0,2,4,6,8 | 0 | 2 | 2 | 6 |
|-----|-------|---|---|-----------|---|---|---|---|
| 176 | A3/B3 | 1 | 0 | 0,1,2,3,4,5,6,7,8,9 | 0 | 2 | 2 | 6 |
| 177 | B1 | 16 | 0 | 4,9 | 0 | 1 | 7 | 2 |
| 178 | B1 | 16 | 1 | 4 | 0 | 2 | 7 | 2 |
| 179 | B1 | 8 | 0 | 4,9 | 0 | 1 | 7 | 2 |
| 180 | B1 | 8 | 1 | 4 | 0 | 2 | 7 | 2 |
| 181 | B1 | 4 | 0 | 4,9 | 0 | 1 | 7 | 2 |
| 182 | B1 | 4 | 1 | 4,9 | 0 | 1 | 7 | 2 |
| 183 | B1 | 4 | 0 | 4 | 0 | 2 | 7 | 2 |
| 184 | B1 | 2 | 0 | 4,9 | 0 | 1 | 7 | 2 |
| 185 | B1 | 2 | 0 | 1 | 0 | 2 | 7 | 2 |
| 186 | B1 | 2 | 0 | 4 | 0 | 2 | 7 | 2 |
| 187 | B1 | 2 | 0 | 7 | 0 | 2 | 7 | 2 |
| 188 | B1 | 1 | 0 | 4 | 0 | 1 | 7 | 2 |
| 189 | B1 | 1 | 0 | 1,6 | 0 | 1 | 7 | 2 |
| 190 | B1 | 1 | 0 | 4,9 | 0 | 1 | 7 | 2 |
| 191 | B1 | 1 | 0 | 1 | 0 | 2 | 7 | 2 |
| 192 | B1 | 1 | 0 | 7 | 0 | 2 | 7 | 2 |
| 193 | B1 | 1 | 0 | 2,7 | 0 | 2 | 7 | 2 |
| 194 | B1 | 1 | 0 | 1,4,7 | 0 | 2 | 7 | 2 |
| 195 | B1 | 1 | 0 | 0,2,4,6,8 | 0 | 2 | 7 | 2 |
| 196 | B1 | 1 | 0 | 0,1,2,3,4,5,6,7,8,9 | 0 | 2 | 7 | 2 |
| 197 | B1 | 1 | 0 | 1,3,5,7,9 | 0 | 2 | 7 | 2 |
| 198 | B4 | 16 | 0 | 4,9 | 0 | 2 | 1 | 12 |
| 199 | B4 | 16 | 1 | 4 | 0 | 2 | 1 | 12 |
| 200 | B4 | 8 | 0 | 4,9 | 0 | 2 | 1 | 12 |
| 201 | B4 | 8 | 1 | 4 | 0 | 2 | 1 | 12 |
| 202 | B4 | 4 | 0 | 4,9 | 0 | 2 | 1 | 12 |
| 203 | B4 | 4 | 0 | 4 | 0 | 2 | 1 | 12 |
| 204 | B4 | 4 | 1 | 4,9 | 0 | 2 | 1 | 12 |
| 205 | B4 | 2 | 0 | 4,9 | 0 | 2 | 1 | 12 |
| 206 | B4 | 2 | 0 | 1 | 0 | 2 | 1 | 12 |
| 207 | B4 | 2 | 0 | 4 | 0 | 2 | 1 | 12 |
| 208 | B4 | 2 | 0 | 7 | 0 | 2 | 1 | 12 |
| 209 | B4 | 1 | 0 | 1 | 0 | 2 | 1 | 12 |
| 210 | B4 | 1 | 0 | 4 | 0 | 2 | 1 | 12 |

17

| 211 | B4 | 1 | 0 | 7 | 0 | 2 | 1 | 12 |
|---|---|---|---|---|---|---|---|---|
| 212 | B4 | 1 | 0 | 1,6 | 0 | 2 | 1 | 12 |
| 213 | B4 | 1 | 0 | 2,7 | 0 | 2 | 1 | 12 |
| 214 | B4 | 1 | 0 | 4,9 | 0 | 2 | 1 | 12 |
| 215 | B4 | 1 | 0 | 1,4,7 | 0 | 2 | 1 | 12 |
| 216 | B4 | 1 | 0 | 0,2,4,6,8 | 0 | 2 | 1 | 12 |
| 217 | B4 | 1 | 0 | 0,1,2,3,4, 5,6,7,8,9 | 0 | 2 | 1 | 12 |
| 218 | B4 | 1 | 0 | 1,3,5,7,9 | 0 | 2 | 1 | 12 |
| 219 | C0 | 8 | 1 | 4 | 0 | 2 | 7 | 2 |
| 220 | C0 | 4 | 1 | 4,9 | 0 | 1 | 7 | 2 |
| 221 | C0 | 4 | 0 | 4 | 0 | 2 | 7 | 2 |
| 222 | C0 | 2 | 0 | 4,9 | 0 | 1 | 7 | 2 |
| 223 | C0 | 2 | 0 | 1 | 0 | 2 | 7 | 2 |
| 224 | C0 | 2 | 0 | 4 | 0 | 2 | 7 | 2 |
| 225 | C0 | 2 | 0 | 7 | 0 | 2 | 7 | 2 |
| 226 | C0 | 1 | 0 | 4 | 0 | 1 | 7 | 2 |
| 227 | C0 | 1 | 0 | 1,6 | 0 | 1 | 7 | 2 |
| 228 | C0 | 1 | 0 | 4,9 | 0 | 1 | 7 | 2 |
| 229 | C0 | 1 | 0 | 1 | 0 | 2 | 7 | 2 |
| 230 | C0 | 1 | 0 | 7 | 0 | 2 | 7 | 2 |
| 231 | C0 | 1 | 0 | 2,7 | 0 | 2 | 7 | 2 |
| 232 | C0 | 1 | 0 | 1,4,7 | 0 | 2 | 7 | 2 |
| 233 | C0 | 1 | 0 | 0,2,4,6,8 | 0 | 2 | 7 | 2 |
| 234 | C0 | 1 | 0 | 0,1,2,3,4, 5,6,7,8,9 | 0 | 2 | 7 | 2 |
| 235 | C0 | 1 | 0 | 1,3,5,7,9 | 0 | 2 | 7 | 2 |
| 236 | C2 | 16 | 1 | 4,9 | 0 | 1 | 2 | 6 |

| 237 | C2 | 16 | 1 | 4 | 0 | 2 | 2 | 6 |
|---|---|---|---|---|---|---|---|---|
| 238 | C2 | 8 | 1 | 4,9 | 0 | 1 | 2 | 6 |
| 239 | C2 | 8 | 1 | 4 | 0 | 2 | 2 | 6 |
| 240 | C2 | 4 | 0 | 4,9 | 0 | 1 | 2 | 6 |
| 241 | C2 | 4 | 0 | 4 | 0 | 2 | 2 | 6 |
| 242 | C2 | 2 | 1 | 2,6,9 | 0 | 2 | 2 | 6 |
| 243 | C2 | 2 | 0 | 1 | 0 | 2 | 2 | 6 |
| 244 | C2 | 2 | 0 | 4 | 0 | 2 | 2 | 6 |
| 245 | C2 | 2 | 0 | 7 | 0 | 2 | 2 | 6 |
| 246 | C2 | 1 | 0 | 4 | 0 | 1 | 2 | 6 |
| 247 | C2 | 1 | 0 | 1,6 | 0 | 1 | 2 | 6 |

| 248 | C2 | 1 | 0 | 4,9 | 0 | 1 | 2 | 6 |
|-----|----|---|---|-----|---|---|---|---|
| 249 | C2 | 1 | 0 | 1 | 0 | 2 | 2 | 6 |
| 250 | C2 | 1 | 0 | 7 | 0 | 2 | 2 | 6 |
| 251 | C2 | 1 | 0 | 2,7 | 0 | 2 | 2 | 6 |
| 252 | C2 | 1 | 0 | 1,4,7 | 0 | 2 | 2 | 6 |
| 253 | C2 | 1 | 0 | 0,2,4,6,8 | 0 | 2 | 2 | 6 |
| 254 | C2 | 1 | 0 | 0,1,2,3,4,5,6,7,8,9 | 0 | 2 | 2 | 6 |
| 255 | C2 | 1 | 0 | 1,3,5,7,9 | 0 | 2 | 2 | 6 |

【Table 3】

Table 6.3.3.2-3: Random access configurations for FR1 and unpaired spectrum.

| PRACH Configuration index | Preamble format | $n_{SFN} \bmod x$ | | Subframe number | Starting symbol | Number of PRACH slots within a subframe | $N^{RA,slot}$, number of time-domain PRACH ccasions within a PRACH slot | $N^{RA}_{dur}$ PRACH duration |
|---|---|---|---|---|---|---|---|---|
| | | x | y | | | | | |
| 0 | 0 | 16 | 1 | 9 | 0 | - | - | 0 |
| 1 | 0 | 8 | 1 | 9 | 0 | - | - | 0 |
| 2 | 0 | 4 | 1 | 9 | 0 | - | - | 0 |
| 3 | 0 | 2 | 0 | 9 | 0 | - | - | 0 |
| 4 | 0 | 2 | 1 | 9 | 0 | - | - | 0 |
| 5 | 0 | 2 | 0 | 4 | 0 | - | - | 0 |
| 6 | 0 | 2 | 1 | 4 | 0 | - | - | 0 |
| 7 | 0 | 1 | 0 | 9 | 0 | - | - | 0 |
| 8 | 0 | 1 | 0 | 8 | 0 | - | - | 0 |
| 9 | 0 | 1 | 0 | 7 | 0 | - | - | 0 |
| 10 | 0 | 1 | 0 | 6 | 0 | - | - | 0 |
| 11 | 0 | 1 | 0 | 5 | 0 | - | - | 0 |
| 12 | 0 | 1 | 0 | 4 | 0 | - | - | 0 |
| 13 | 0 | 1 | 0 | 3 | 0 | - | - | 0 |
| 14 | 0 | 1 | 0 | 2 | 0 | - | - | 0 |
| 15 | 0 | 1 | 0 | 1,6 | 0 | | | 0 |
| 16 | 0 | 1 | 0 | 1,6 | 7 | - | - | 0 |
| 17 | 0 | 1 | 0 | 4,9 | 0 | - | - | 0 |
| 18 | 0 | 1 | 0 | 3,8 | 0 | - | - | 0 |

| | | | | | | | | |
|---|---|---|---|---|---|---|---|---|
| 19 | 0 | 1 | 0 | 2,7 | 0 | - | - | 0 |
| 20 | 0 | 1 | 0 | 8,9 | 0 | - | - | 0 |
| 21 | 0 | 1 | 0 | 4,8,9 | 0 | - | - | 0 |
| 22 | 0 | 1 | 0 | 3,4,9 | 0 | - | - | 0 |
| 23 | 0 | 1 | 0 | 7,8,9 | 0 | - | - | 0 |
| 24 | 0 | 1 | 0 | 3,4,8,9 | 0 | - | - | 0 |
| 25 | 0 | 1 | 0 | 6,7,8,9 | 0 | - | - | 0 |
| 26 | 0 | 1 | 0 | 1,4,6,9 | 0 | - | - | 0 |
| 27 | 0 | 1 | 0 | 1,3,5,7,9 | 0 | - | - | 0 |
| 28 | 1 | 16 | 1 | 7 | 0 | - | - | 0 |
| 29 | 1 | 8 | 1 | 7 | 0 | - | - | 0 |
| 30 | 1 | 4 | 1 | 7 | 0 | - | - | 0 |
| 31 | 1 | 2 | 0 | 7 | 0 | - | - | 0 |
| 32 | 1 | 2 | 1 | 7 | 0 | - | - | 0 |
| 33 | 1 | 1 | 0 | 7 | 0 | - | - | 0 |
| 34 | 2 | 16 | 1 | 6 | 0 | - | - | 0 |
| 35 | 2 | 8 | 1 | 6 | 0 | - | - | 0 |
| 36 | 2 | 4 | 1 | 6 | 0 | - | - | 0 |
| 37 | 2 | 2 | 0 | 6 | 7 | - | - | 0 |
| 38 | 2 | 2 | 1 | 6 | 7 | - | - | 0 |
| 39 | 2 | 1 | 0 | 6 | 7 | - | - | 0 |
| 40 | 3 | 16 | 1 | 9 | 0 | - | - | 0 |
| 41 | 3 | 8 | 1 | 9 | 0 | - | - | 0 |
| 42 | 3 | 4 | 1 | 9 | 0 | - | - | 0 |
| 43 | 3 | 2 | 0 | 9 | 0 | - | - | 0 |
| 44 | 3 | 2 | 1 | 9 | 0 | - | - | 0 |
| 45 | 3 | 2 | 0 | 4 | 0 | - | - | 0 |
| 46 | 3 | 2 | 1 | 4 | 0 | - | - | 0 |
| 47 | 3 | 1 | 0 | 9 | 0 | - | - | 0 |
| 48 | 3 | 1 | 0 | 8 | 0 | - | - | 0 |
| 49 | 3 | 1 | 0 | 7 | 0 | - | - | 0 |

| | | | | | | | | |
|---|---|---|---|---|---|---|---|---|
| 50 | 3 | 1 | 0 | 6 | 0 | - | - | 0 |
| 51 | 3 | 1 | 0 | 5 | 0 | - | - | 0 |
| 52 | 3 | 1 | 0 | 4 | 0 | - | - | 0 |
| 53 | 3 | 1 | 0 | 3 | 0 | - | - | 0 |
| 54 | 3 | 1 | 0 | 2 | 0 | - | - | 0 |
| 55 | 3 | 1 | 0 | 1,6 | 0 | - | - | 0 |
| 56 | 3 | 1 | 0 | 1,6 | 7 | - | - | 0 |

| 57 | 3 | 1 | 0 | 4,9 | 0 | - | - | 0 |
|---|---|---|---|---|---|---|---|---|
| 58 | 3 | 1 | 0 | 3,8 | 0 | - | - | 0 |
| 59 | 3 | 1 | 0 | 2,7 | 0 | - | - | 0 |
| 60 | 3 | 1 | 0 | 8,9 | 0 | - | - | 0 |
| 61 | 3 | 1 | 0 | 4,8,9 | 0 | - | - | 0 |
| 62 | 3 | 1 | 0 | 3,4,9 | 0 | - | - | 0 |
| 63 | 3 | 1 | 0 | 7,8,9 | 0 | - | - | 0 |
| 64 | 3 | 1 | 0 | 3,4,8,9 | 0 | - | - | 0 |
| 65 | 3 | 1 | 0 | 1,4,6,9 | 0 | - | - | 0 |
| 66 | 3 | 1 | 0 | 1,3,5,7,9 | 0 | - | - | 0 |
| 67 | A1 | 16 | 1 | 9 | 0 | 2 | 6 | 2 |
| 68 | A1 | 8 | 1 | 9 | 0 | 2 | 6 | 2 |
| 69 | A1 | 4 | 1 | 9 | 0 | 1 | 6 | 2 |
| 70 | A1 | 2 | 1 | 9 | 0 | 1 | 6 | 2 |
| 71 | A1 | 2 | 1 | 4,9 | 7 | 1 | 3 | 2 |
| 72 | A1 | 2 | 1 | 7,9 | 7 | 1 | 3 | 2 |
| 73 | A1 | 2 | 1 | 7,9 | 0 | 1 | 6 | 2 |
| 74 | A1 | 2 | 1 | 8,9 | 0 | 2 | 6 | 2 |
| 75 | A1 | 2 | 1 | 4,9 | 0 | 2 | 6 | 2 |
| 76 | A1 | 2 | 1 | 2,3,4,7,8,9 | 0 | 1 | 6 | 2 |
| 77 | A1 | 1 | 0 | 9 | 0 | 2 | 6 | 2 |
| 78 | A1 | 1 | 0 | 9 | 7 | 1 | 3 | 2 |
| 79 | A1 | 1 | 0 | 9 | 0 | 1 | 6 | 2 |
| 80 | A1 | 1 | 0 | 8,9 | 0 | 2 | 6 | 2 |
| 81 | A1 | 1 | 0 | 4,9 | 0 | 1 | 6 | 2 |

| 82 | A1 | 1 | 0 | 7,9 | 7 | 1 | 3 | 2 |
|---|---|---|---|---|---|---|---|---|
| 83 | A1 | 1 | 0 | 3,4,8,9 | 0 | 1 | 6 | 2 |
| 84 | A1 | 1 | 0 | 3,4,8,9 | 0 | 2 | 6 | 2 |
| 85 | A1 | 1 | 0 | 1,3,5,7,9 | 0 | 1 | 6 | 2 |
| 86 | A1 | 1 | 0 | 0,1,2,3,4,5,6,7,8,9 | 7 | 1 | 3 | 2 |
| 87 | A2 | 16 | 1 | 9 | 0 | 2 | 3 | 4 |
| 88 | A2 | 8 | 1 | 9 | 0 | 2 | 3 | 4 |
| 89 | A2 | 4 | 1 | 9 | 0 | 1 | 3 | 4 |
| 90 | A2 | 2 | 1 | 7,9 | 0 | 1 | 3 | 4 |
| 91 | A2 | 2 | 1 | 8,9 | 0 | 2 | 3 | 4 |
| 92 | A2 | 2 | 1 | 7,9 | 9 | 1 | 1 | 4 |
| 93 | A2 | 2 | 1 | 4,9 | 9 | 1 | 1 | 4 |

| | | | | | | | | |
|---|---|---|---|---|---|---|---|---|
| 94 | A2 | 2 | 1 | 4,9 | 0 | 2 | 3 | 4 |
| 95 | A2 | 2 | 1 | 2,3,4,7, 8,9 | 0 | 1 | 3 | 4 |
| 96 | A2 | 1 | 0 | 2 | 0 | 1 | 3 | 4 |
| 97 | A2 | 1 | 0 | 7 | 0 | 1 | 3 | 4 |
| 98 | A2 | 2 | 1 | 9 | 0 | 1 | 3 | 4 |
| 99 | A2 | 1 | 0 | 9 | 0 | 2 | 3 | 4 |
| 100 | A2 | 1 | 0 | 9 | 9 | 1 | 1 | 4 |
| 101 | A2 | 1 | 0 | 9 | 0 | 1 | 3 | 4 |
| 102 | A2 | 1 | 0 | 2,7 | 0 | 1 | 3 | 4 |
| 103 | A2 | 1 | 0 | 8,9 | 0 | 2 | 3 | 4 |
| 104 | A2 | 1 | 0 | 4,9 | 0 | 1 | 3 | 4 |
| 105 | A2 | 1 | 0 | 7,9 | 9 | 1 | 1 | 4 |
| 106 | A2 | 1 | 0 | 3,4,8,9 | 0 | 1 | 3 | 4 |
| 107 | A2 | 1 | 0 | 3,4,8,9 | 0 | 2 | 3 | 4 |
| 108 | A2 | 1 | 0 | 1,3,5,7,9 | 0 | 1 | 3 | 4 |
| 109 | A2 | 1 | 0 | 0,1,2,3, 4,5,6,7, 8,9 | 9 | 1 | 1 | 4 |
| 110 | A3 | 16 | 1 | 9 | 0 | 2 | 2 | 6 |

| | | | | | | | | |
|---|---|---|---|---|---|---|---|---|
| 111 | A3 | 8 | 1 | 9 | 0 | 2 | 2 | 6 |
| 112 | A3 | 4 | 1 | 9 | 0 | 1 | 2 | 6 |
| 113 | A3 | 2 | 1 | 4,9 | 7 | 1 | 1 | 6 |
| 114 | A3 | 2 | 1 | 7,9 | 7 | 1 | 1 | 6 |
| 115 | A3 | 2 | 1 | 7,9 | 0 | 1 | 2 | 6 |
| 116 | A3 | 2 | 1 | 4,9 | 0 | 2 | 2 | 6 |
| 117 | A3 | 2 | 1 | 8,9 | 0 | 2 | 2 | 6 |
| 118 | A3 | 2 | 1 | 2,3,4,7, 8,9 | 0 | 1 | 2 | 6 |
| 119 | A3 | 1 | 0 | 2 | 0 | 1 | 2 | 6 |
| 120 | A3 | 1 | 0 | 7 | 0 | 1 | 2 | 6 |
| 121 | A3 | 2 | 1 | 9 | 0 | 1 | 2 | 6 |
| 122 | A3 | 1 | 0 | 9 | 0 | 2 | 2 | 6 |
| 123 | A3 | 1 | 0 | 9 | 7 | 1 | 1 | 6 |
| 124 | A3 | 1 | 0 | 9 | 0 | 1 | 2 | 6 |
| 125 | A3 | 1 | 0 | 2,7 | 0 | 1 | 2 | 6 |
| 126 | A3 | 1 | 0 | 8,9 | 0 | 2 | 2 | 6 |
| 127 | A3 | 1 | 0 | 4,9 | 0 | 1 | 2 | 6 |
| 128 | A3 | 1 | 0 | 7,9 | 7 | 1 | 1 | 6 |

| | | | | | | | | |
|---|---|---|---|---|---|---|---|---|
| 129 | A3 | 1 | 0 | 3,4,8,9 | 0 | 1 | 2 | 6 |
| 130 | A3 | 1 | 0 | 3,4,8,9 | 0 | 2 | 2 | 6 |
| 131 | A3 | 1 | 0 | 1,3,5,7,9 | 0 | 1 | 2 | 6 |
| 132 | A3 | 1 | 0 | 0,1,2,3,4,<br>5,6,7,8,<br>9 | 7 | 1 | 1 | 6 |
| 133 | B1 | 4 | 1 | 9 | 2 | 1 | 6 | 2 |
| 134 | B1 | 2 | 1 | 9 | 2 | 1 | 6 | 2 |
| 135 | B1 | 2 | 1 | 7,9 | 2 | 1 | 6 | 2 |
| 136 | B1 | 2 | 1 | 4,9 | 8 | 1 | 3 | 2 |
| 137 | B1 | 2 | 1 | 4,9 | 2 | 2 | 6 | 2 |
| 138 | B1 | 1 | 0 | 9 | 2 | 2 | 6 | 2 |
| 139 | B1 | 1 | 0 | 9 | 8 | 1 | 3 | 2 |
| 140 | B1 | 1 | 0 | 9 | 2 | 1 | 6 | 2 |

| | | | | | | | | |
|---|---|---|---|---|---|---|---|---|
| 141 | B1 | 1 | 0 | 8,9 | 2 | 2 | 6 | 2 |
| 142 | B1 | 1 | 0 | 4,9 | 2 | 1 | 6 | 2 |
| 143 | B1 | 1 | 0 | 7,9 | 8 | 1 | 3 | 2 |
| 144 | B1 | 1 | 0 | 1,3,5,7,9 | 2 | 1 | 6 | 2 |
| 145 | B4 | 16 | 1 | 9 | 0 | 2 | 1 | 12 |
| 146 | B4 | 8 | 1 | 9 | 0 | 2 | 1 | 12 |
| 147 | B4 | 4 | 1 | 9 | 2 | 1 | 1 | 12 |
| 148 | B4 | 2 | 1 | 9 | 0 | 1 | 1 | 12 |
| 149 | B4 | 2 | 1 | 9 | 2 | 1 | 1 | 12 |
| 150 | B4 | 2 | 1 | 7,9 | 2 | 1 | 1 | 12 |
| 151 | B4 | 2 | 1 | 4,9 | 2 | 1 | 1 | 12 |
| 152 | B4 | 2 | 1 | 4,9 | 0 | 2 | 1 | 12 |
| 153 | B4 | 2 | 1 | 8,9 | 0 | 2 | 1 | 12 |
| 154 | B4 | 2 | 1 | 2,3,4,7,8,9 | 0 | 1 | 1 | 12 |
| 155 | B4 | 1 | 0 | 1 | 0 | 1 | 1 | 12 |
| 156 | B4 | 1 | 0 | 2 | 0 | 1 | 1 | 12 |
| 157 | B4 | 1 | 0 | 4 | 0 | 1 | 1 | 12 |
| 158 | B4 | 1 | 0 | 7 | 0 | 1 | 1 | 12 |
| 159 | B4 | 1 | 0 | 9 | 0 | 1 | 1 | 12 |
| 160 | B4 | 1 | 0 | 9 | 2 | 1 | 1 | 12 |
| 161 | B4 | 1 | 0 | 9 | 0 | 2 | 1 | 12 |
| 162 | B4 | 1 | 0 | 4,9 | 2 | 1 | 1 | 12 |
| 163 | B4 | 1 | 0 | 7,9 | 2 | 1 | 1 | 12 |
| 164 | B4 | 1 | 0 | 8,9 | 0 | 2 | 1 | 12 |

| 165 | B4 | 1 | 0 | 3,4,8,9 | 2 | 1 | 1 | 12 |
|---|---|---|---|---|---|---|---|---|
| 166 | B4 | 1 | 0 | 1,3,5,7,9 | 2 | 1 | 1 | 12 |
| 167 | B4 | 1 | 0 | 0,1,2,3,4,5,6,7,8,9 | 0 | 2 | 1 | 12 |
| 168 | B4 | 1 | 0 | 0,1,2,3,4,5,6,7,8,9 | 2 | 1 | 1 | 12 |
| 169 | C0 | 16 | 1 | 9 | 2 | 2 | 6 | 2 |
| 170 | C0 | 8 | 1 | 9 | 2 | 2 | 6 | 2 |
| 171 | C0 | 4 | 1 | 9 | 2 | 1 | 6 | 2 |

| 172 | C0 | 2 | 1 | 9 | 2 | 1 | 6 | 2 |
|---|---|---|---|---|---|---|---|---|
| 173 | C0 | 2 | 1 | 8,9 | 2 | 2 | 6 | 2 |
| 174 | C0 | 2 | 1 | 7,9 | 2 | 1 | 6 | 2 |
| 175 | C0 | 2 | 1 | 7,9 | 8 | 1 | 3 | 2 |
| 176 | C0 | 2 | 1 | 4,9 | 8 | 1 | 3 | 2 |
| 177 | C0 | 2 | 1 | 4,9 | 2 | 2 | 6 | 2 |
| 178 | C0 | 2 | 1 | 2,3,4,7,8,9 | 2 | 1 | 6 | 2 |
| 179 | C0 | 1 | 0 | 9 | 2 | 2 | 6 | 2 |
| 180 | C0 | 1 | 0 | 9 | 8 | 1 | 3 | 2 |
| 181 | C0 | 1 | 0 | 9 | 2 | 1 | 6 | 2 |
| 182 | C0 | 1 | 0 | 8,9 | 2 | 2 | 6 | 2 |
| 183 | C0 | 1 | 0 | 4,9 | 2 | 1 | 6 | 2 |
| 184 | C0 | 1 | 0 | 7,9 | 8 | 1 | 3 | 2 |
| 185 | C0 | 1 | 0 | 3,4,8,9 | 2 | 1 | 6 | 2 |
| 186 | C0 | 1 | 0 | 3,4,8,9 | 2 | 2 | 6 | 2 |
| 187 | C0 | 1 | 0 | 1,3,5,7,9 | 2 | 1 | 6 | 2 |
| 188 | C0 | 1 | 0 | 0,1,2,3,4,5,6,7,8,9 | 8 | 1 | 3 | 2 |
| 189 | C2 | 16 | 1 | 9 | 2 | 2 | 2 | 6 |
| 190 | C2 | 8 | 1 | 9 | 2 | 2 | 2 | 6 |
| 191 | C2 | 4 | 1 | 9 | 2 | 1 | 2 | 6 |
| 192 | C2 | 2 | 1 | 9 | 2 | 1 | 2 | 6 |
| 193 | C2 | 2 | 1 | 8,9 | 2 | 2 | 2 | 6 |
| 194 | C2 | 2 | 1 | 7,9 | 2 | 1 | 2 | 6 |
| 195 | C2 | 2 | 1 | 7,9 | 8 | 1 | 1 | 6 |
| 196 | C2 | 2 | 1 | 4,9 | 8 | 1 | 1 | 6 |
| 197 | C2 | 2 | 1 | 4,9 | 2 | 2 | 2 | 6 |
| 198 | C2 | 2 | 1 | 2,3,4,7,8,9 | 2 | 1 | 2 | 6 |
| 199 | C2 | 8 | 1 | 9 | 8 | 2 | 1 | 6 |
| 200 | C2 | 4 | 1 | 9 | 8 | 1 | 1 | 6 |

| 201 | C2 | 1 | 0 | 9 | 2 | 2 | 2 | 6 |
| 202 | C2 | 1 | 0 | 9 | 8 | 1 | 1 | 6 |

| 203 | C2 | 1 | 0 | 9 | 2 | 1 | 2 | 6 |
| 204 | C2 | 1 | 0 | 8,9 | 2 | 2 | 2 | 6 |
| 205 | C2 | 1 | 0 | 4,9 | 2 | 1 | 2 | 6 |
| 206 | C2 | 1 | 0 | 7,9 | 8 | 1 | 1 | 6 |
| 207 | C2 | 1 | 0 | 3,4,8,9 | 2 | 1 | 2 | 6 |
| 208 | C2 | 1 | 0 | 3,4,8,9 | 2 | 2 | 2 | 6 |
| 209 | C2 | 1 | 0 | 1,3,5,7,9 | 2 | 1 | 2 | 6 |
| 210 | C2 | 1 | 0 | 0,1,2,3,4,5,6,7,8,9 | 8 | 1 | 1 | 6 |
| 211 | A1/B1 | 2 | 1 | 9 | 2 | 1 | 6 | 2 |
| 212 | A1/B1 | 2 | 1 | 4,9 | 8 | 1 | 3 | 2 |
| 213 | A1/B1 | 2 | 1 | 7,9 | 8 | 1 | 3 | 2 |
| 214 | A1/B1 | 2 | 1 | 7,9 | 2 | 1 | 6 | 2 |
| 215 | A1/B1 | 2 | 1 | 4,9 | 2 | 2 | 6 | 2 |
| 216 | A1/B1 | 2 | 1 | 8,9 | 2 | 2 | 6 | 2 |
| 217 | A1/B1 | 1 | 0 | 9 | 2 | 2 | 6 | 2 |
| 218 | A1/B1 | 1 | 0 | 9 | 8 | 1 | 3 | 2 |
| 219 | A1/B1 | 1 | 0 | 9 | 2 | 1 | 6 | 2 |
| 220 | A1/B1 | 1 | 0 | 8,9 | 2 | 2 | 6 | 2 |
| 221 | A1/B1 | 1 | 0 | 4,9 | 2 | 1 | 6 | 2 |
| 222 | A1/B1 | 1 | 0 | 7,9 | 8 | 1 | 3 | 2 |
| 223 | A1/B1 | 1 | 0 | 3,4,8,9 | 2 | 2 | 6 | 2 |
| 224 | A1/B1 | 1 | 0 | 1,3,5,7,9 | 2 | 1 | 6 | 2 |
| 225 | A1/B1 | 1 | 0 | 0,1,2,3,4,5,6,7,8,9 | 8 | 1 | 3 | 2 |
| 226 | A2/B2 | 2 | 1 | 9 | 0 | 1 | 3 | 4 |
| 227 | A2/B2 | 2 | 1 | 4,9 | 6 | 1 | 2 | 4 |
| 228 | A2/B2 | 2 | 1 | 7,9 | 6 | 1 | 2 | 4 |
| 229 | A2/B2 | 2 | 1 | 4,9 | 0 | 2 | 3 | 4 |
| 230 | A2/B2 | 2 | 1 | 8,9 | 0 | 2 | 3 | 4 |
| 231 | A2/B2 | 1 | 0 | 9 | 0 | 2 | 3 | 4 |
| 232 | A2/B2 | 1 | 0 | 9 | 6 | 1 | 2 | 4 |
| 233 | A2/B2 | 1 | 0 | 9 | 0 | 1 | 3 | 4 |

| 234 | A2/B2 | 1 | 0 | 8,9 | 0 | 2 | 3 | 4 |

| | | | | | | | | |
|---|---|---|---|---|---|---|---|---|
| 235 | A2/B2 | 1 | 0 | 4,9 | 0 | 1 | 3 | 4 |
| 236 | A2/B2 | 1 | 0 | 7,9 | 6 | 1 | 2 | 4 |
| 237 | A2/B2 | 1 | 0 | 3,4,8,9 | 0 | 1 | 3 | 4 |
| 238 | A2/B2 | 1 | 0 | 3,4,8,9 | 0 | 2 | 3 | 4 |
| 239 | A2/B2 | 1 | 0 | 1,3,5,7,9 | 0 | 1 | 3 | 4 |
| 240 | A2/B2 | 1 | 0 | 0,1,2,3,4,5,6,7,8 | 6 | 1 | 2 | 4 |

| | | | | , 9 | | | | |
|---|---|---|---|---|---|---|---|---|
| 241 | A3/B3 | 2 | 1 | 9 | 0 | 1 | 2 | 6 |
| 242 | A3/B3 | 2 | 1 | 4, 9 | 2 | 1 | 2 | 6 |
| 243 | A3/B3 | 2 | 1 | 7, 9 | 0 | 1 | 2 | 6 |
| 244 | A3/B3 | 2 | 1 | 7, 9 | 2 | 1 | 2 | 6 |
| 245 | A3/B3 | 2 | 1 | 4, 9 | 0 | 2 | 2 | 6 |
| 246 | A3/B3 | 2 | 1 | 8, 9 | 0 | 2 | 2 | 6 |
| 247 | A3/B3 | 1 | 0 | 9 | 0 | 2 | 2 | 6 |
| 248 | A3/B3 | 1 | 0 | 9 | 2 | 1 | 2 | 6 |
| 249 | A3/B3 | 1 | 0 | 9 | 0 | 1 | 2 | 6 |
| 250 | A3/B3 | 1 | 0 | 8, 9 | 0 | 2 | 2 | 6 |
| 251 | A3/B3 | 1 | 0 | 4, 9 | 0 | 1 | 2 | 6 |
| 252 | A3/B3 | 1 | 0 | 7, 9 | 2 | 1 | 2 | 6 |
| 253 | A3/B3 | 1 | 0 | 3, 4, 8, 9 | 0 | 2 | 2 | 6 |
| 254 | A3/B3 | 1 | 0 | 1, 3, 5, 7 | 0 | 1 | 2 | 6 |

| | | | | | | | | |
|---|---|---|---|---|---|---|---|---|
| | | | ,9 | | | | | |
| 255 | A3/B3 | 1 | 0 | 0,1,2,3,4,5,6,7,8,9 | 2 | 1 | 2 | 6 |
| 256 | 0 | 16 | 1 | 7 | 0 | - | - | 0 |
| 257 | 0 | 8 | 1 | 7 | 0 | - | - | 0 |
| 258 | 0 | 4 | 1 | 7 | 0 | - | - | 0 |
| 259 | 0 | 2 | 0 | 7 | 0 | - | - | 0 |
| 260 | 0 | 2 | 1 | 7 | 0 | - | - | 0 |
| 261 | 0 | 2 | 0 | 2 | 0 | - | - | 0 |
| 262 | 0 | 2 | 1 | 2 | 0 | - | - | 0 |

【Table 4】

| Table 6.3.3.2-4: Random access configurations for FR2 and unpaired spectrum. | | | | | | | | |
|---|---|---|---|---|---|---|---|---|
| PRACH Configuration index | Preamble format | $n_{SFN} mod x$ | | Subframe number | Starting symbol | Number of PRACH slots within a subframe | $N^{RA,slot}$, number of time-domain PRACH ccasions within a PRACH slot | $N^{RA}_{dur}$, PRACH duration |
| | | x | y | | | | | |
| 0 | A1 | 16 | 1 | 4,9,14,19, 24,29,34,39 | 0 | 2 | 6 | 2 |
| 1 | A1 | 16 | 1 | 3,7,11,15, 19,23,27, | 0 | 1 | 6 | 2 |

| | | | | | | | | |
|---|---|---|---|---|---|---|---|---|
| | | | | 31,35,39 | | | | |
| 2 | A1 | 8 | 1,2 | 9,19,29,39 | 0 | 2 | 6 | 2 |
| 3 | A1 | 8 | 1 | 4,9,14,19, 24,29,34,39 | 0 | 2 | 6 | 2 |
| 4 | A1 | 8 | 1 | 3,7,11,15, 19,23,27,31, 35,39 | 0 | 1 | 6 | 2 |
| 5 | A1 | 4 | 1 | 4,9,14,19, 24,29,34,39 | 0 | 1 | 6 | 2 |
| 6 | A1 | 4 | 1 | 4,9,14,19, 24,29,34,39 | 0 | 2 | 6 | 2 |
| 7 | A1 | 4 | 1 | 3,7,11,15, 19,23,27,31, 35,39 | 0 | 1 | 6 | 2 |
| 8 | A1 | 2 | 1 | 7,15,23,31, 39 | 0 | 2 | 6 | 2 |
| 9 | A1 | 2 | 1 | 4,9,14,19, 24,29,34,39 | 0 | 1 | 6 | 2 |

| | | | | | | | | |
|---|---|---|---|---|---|---|---|---|
| 10 | A1 | 2 | 1 | 4,9,14,19, 24,29,34,39 | 0 | 2 | 6 | 2 |
| 11 | A1 | 2 | 1 | 3,7,11,15, 19,23,27,31, 35,39 | 0 | 1 | 6 | 2 |
| 12 | A1 | 1 | 0 | 19,39 | 7 | 1 | 3 | 2 |
| 13 | A1 | 1 | 0 | 3,5,7 | 0 | 1 | 6 | 2 |
| 14 | A1 | 1 | 0 | 24,29,34,39 | 7 | 1 | 3 | 2 |
| 15 | A1 | 1 | 0 | 9,19,29,39 | 7 | 2 | 3 | 2 |
| 16 | A1 | 1 | 0 | 17,19,37,39 | 0 | 1 | 6 | 2 |
| 17 | A1 | 1 | 0 | 9,19,29,39 | 0 | 2 | 6 | 2 |
| 18 | A1 | 1 | 0 | 4,9,14,19, 24,29,34,39 | 0 | 1 | 6 | 2 |
| 19 | A1 | 1 | 0 | 4,9,14,19, 24,29,34,39 | 7 | 1 | 3 | 2 |
| 20 | A1 | 1 | 0 | 3,5,7,9, 11,13 | 7 | 1 | 3 | 2 |
| 21 | A1 | 1 | 0 | 23,27,31,35, 39 | 7 | 1 | 3 | 2 |
| 22 | A1 | 1 | 0 | 7,15,23,31, 39 | 0 | 1 | 6 | 2 |
| 23 | A1 | 1 | 0 | 23,27,31,35, 39 | 0 | 1 | 6 | 2 |

| 24 | A1 | 1 | 0 | 13,14,15, 29, 30,31,37,38, 39 | 7 | 2 | 3 | 2 |
|----|----|---|---|---|---|---|---|---|
| 25 | A1 | 1 | 0 | 3,7,11,15, 19,23,27,31, 35,39 | 7 | 1 | 3 | 2 |
| 26 | A1 | 1 | 0 | 3,7,11,15, 19,23,27,31, 35,39 | 0 | 1 | 6 | 2 |
| 27 | A1 | 1 | 0 | 1,3,5,7, …,37,39 | 0 | 1 | 6 | 2 |
| 28 | A1 | 1 | 0 | 0,1,2, …,39 | 7 | 1 | 3 | 2 |
| 29 | A2 | 16 | 1 | 4,9,14,19, 24,29,34,39 | 0 | 2 | 3 | 4 |
| 30 | A2 | 16 | 1 | 3,7,11,15, 19,23,27,31, 35,39 | 0 | 1 | 3 | 4 |

| 31 | A2 | 8 | 1 | 4,9,14,19, 24,29,34,39 | 0 | 2 | 3 | 4 |
|----|----|---|---|---|---|---|---|---|
| 32 | A2 | 8 | 1 | 3,7,11,15, 19,23,27,31, 35,39 | 0 | 1 | 3 | 4 |
| 33 | A2 | 8 | 1,2 | 9,19,29,39 | 0 | 2 | 3 | 4 |
| 34 | A2 | 4 | 1 | 4,9,14,19, 24,29,34,39 | 0 | 1 | 3 | 4 |
| 35 | A2 | 4 | 1 | 4,9,14,19 ,24,29,34,39 | 0 | 2 | 3 | 4 |
| 36 | A2 | 4 | 1 | 3,7,11,15, 19,23,27,31 ,35,39 | 0 | 1 | 3 | 4 |
| 37 | A2 | 2 | 1 | 7,15,23,31 ,39 | 0 | 2 | 3 | 4 |
| 38 | A2 | 2 | 1 | 4,9,14,19, 24,29,34,39 | 0 | 1 | 3 | 4 |
| 39 | A2 | 2 | 1 | 4,9,14,19, 24,29,34,39 | 0 | 2 | 3 | 4 |
| 40 | A2 | 2 | 1 | 3,7,11,15, 19,23,27,31 ,35,39 | 0 | 1 | 3 | 4 |
| 41 | A2 | 1 | 0 | 19,39 | 5 | 1 | 2 | 4 |
| 42 | A2 | 1 | 0 | 3,5,7 | 0 | 1 | 3 | 4 |
| 43 | A2 | 1 | 0 | 24,29,34,39 | 5 | 1 | 2 | 4 |

32

| | | | | | | | | |
|---|---|---|---|---|---|---|---|---|
| 44 | A2 | 1 | 0 | 9,19,29,39 | 5 | 2 | 2 | 4 |
| 45 | A2 | 1 | 0 | 17,19,37,39 | 0 | 1 | 3 | 4 |
| 46 | A2 | 1 | 0 | 9, 19, 29, 39 | 0 | 2 | 3 | 4 |
| 47 | A2 | 1 | 0 | 7,15,23,31, 39 | 0 | 1 | 3 | 4 |
| 48 | A2 | 1 | 0 | 23,27,31,35, 39 | 5 | 1 | 2 | 4 |
| 49 | A2 | 1 | 0 | 23,27,31,35, 39 | 0 | 1 | 3 | 4 |
| 50 | A2 | 1 | 0 | 3,5,7,9, 11,13 | 5 | 1 | 2 | 4 |
| 51 | A2 | 1 | 0 | 3,5,7,9, 11,13 | 0 | 1 | 3 | 4 |
| 52 | A2 | 1 | 0 | 4,9,14,19, 24,29,34,39 | 5 | 1 | 2 | 4 |

| | | | | | | | | |
|---|---|---|---|---|---|---|---|---|
| 53 | A2 | 1 | 0 | 4,9,14,19, 24,29,34,39 | 0 | 1 | 3 | 4 |
| 54 | A2 | 1 | 0 | 13,14,15, 29, 30,31,37,38, 39 | 5 | 2 | 2 | 4 |
| 55 | A2 | 1 | 0 | 3,7,11,15, 19,23,27,31, 35,39 | 5 | 1 | 2 | 4 |
| 56 | A2 | 1 | 0 | 3,7,11,15, 19,23,27,31, 35,39 | 0 | 1 | 3 | 4 |
| 57 | A2 | 1 | 0 | 1,3,5,7, …,37,39 | 0 | 1 | 3 | 4 |
| 58 | A2 | 1 | 0 | 0,1,2, …,39 | 5 | 1 | 2 | 4 |
| 59 | A3 | 16 | 1 | 4,9,14,19, 24,29,34,39 | 0 | 2 | 2 | 6 |
| 60 | A3 | 16 | 1 | 3,7,11,15, 19,23,27,31, 35,39 | 0 | 1 | 2 | 6 |
| 61 | A3 | 8 | 1 | 4,9,14,19 ,24,29,34,39 | 0 | 2 | 2 | 6 |
| 62 | A3 | 8 | 1 | 3,7,11,15, 19,23,27,31, 35,39 | 0 | 1 | 2 | 6 |
| 63 | A3 | 8 | 1,2 | 9,19,29,39 | 0 | 2 | 2 | 6 |
| 64 | A3 | 4 | 1 | 4,9,14,19 ,24,29,34,39 | 0 | 1 | 2 | 6 |

| 65 | A3 | 4 | 1 | 4,9,14,19, 24,29,34,39 | 0 | 2 | 2 | 6 |
|---|---|---|---|---|---|---|---|---|
| 66 | A3 | 4 | 1 | 3,7,11,15,19 ,23,27,31,35,39 | 0 | 1 | 2 | 6 |
| 67 | A3 | 2 | 1 | 4,9,14,19, 24,29,34,39 | 0 | 1 | 2 | 6 |
| 68 | A3 | 2 | 1 | 4,9,14,19, 24,29,34,39 | 0 | 2 | 2 | 6 |
| 69 | A3 | 2 | 1 | 3,7,11,15,19, 23,27,31,35,39 | 0 | 1 | 2 | 6 |
| 70 | A3 | 1 | 0 | 19,39 | 7 | 1 | 1 | 6 |
| 71 | A3 | 1 | 0 | 3,5,7 | 0 | 1 | 2 | 6 |
| 72 | A3 | 1 | 0 | 9,11,13 | 2 | 1 | 2 | 6 |

| 73 | A3 | 1 | 0 | 24,29,34,39 | 7 | 1 | 1 | 6 |
|---|---|---|---|---|---|---|---|---|
| 74 | A3 | 1 | 0 | 9,19,29,39 | 7 | 2 | 1 | 6 |
| 75 | A3 | 1 | 0 | 17,19,37,39 | 0 | 1 | 2 | 6 |
| 76 | A3 | 1 | 0 | 9,19,29,39 | 0 | 2 | 2 | 6 |
| 77 | A3 | 1 | 0 | 7,15,23,31,39 | 0 | 1 | 2 | 6 |
| 78 | A3 | 1 | 0 | 23,27,31,35,39 | 7 | 1 | 1 | 6 |
| 79 | A3 | 1 | 0 | 23,27,31,35,39 | 0 | 1 | 2 | 6 |
| 80 | A3 | 1 | 0 | 3,5,7,9,11,13 | 0 | 1 | 2 | 6 |
| 81 | A3 | 1 | 0 | 3,5,7,9,11,13 | 7 | 1 | 1 | 6 |
| 82 | A3 | 1 | 0 | 4,9,14,19, 24,29,34,39 | 0 | 1 | 2 | 6 |
| 83 | A3 | 1 | 0 | 4,9,14,19, 24,29,34,39 | 7 | 1 | 1 | 6 |
| 84 | A3 | 1 | 0 | 13,14,15, 29, 30,31,37,38,39 | 7 | 2 | 1 | 6 |
| 85 | A3 | 1 | 0 | 3,7,11,15,19, 23,27,31,35,39 | 7 | 1 | 1 | 6 |
| 86 | A3 | 1 | 0 | 3,7,11,15,19, 23,27,31,35,39 | 0 | 1 | 2 | 6 |
| 87 | A3 | 1 | 0 | 1,3,5,7, …,37,39 | 0 | 1 | 2 | 6 |
| 88 | A3 | 1 | 0 | 0,1,2,…,39 | 7 | 1 | 1 | 6 |
| 89 | B1 | 16 | 1 | 4,9,14,19, 24,29,34,39 | 2 | 2 | 6 | 2 |

| 90 | B1 | 8 | 1 | 4,9,14,19, 24,29,34,39 | 2 | 2 | 6 | 2 |
|---|---|---|---|---|---|---|---|---|
| 91 | B1 | 8 | 1,2 | 9,19,29,39 | 2 | 2 | 6 | 2 |
| 92 | B1 | 4 | 1 | 4,9,14,19, 24,29,34,39 | 2 | 2 | 6 | 2 |
| 93 | B1 | 2 | 1 | 4,9,14,19, 24,29,34,39 | 2 | 2 | 6 | 2 |
| 94 | B1 | 2 | 1 | 3,7,11,15,19, 23,27,31,35,39 | 2 | 1 | 6 | 2 |
| 95 | B1 | 1 | 0 | 19,39 | 8 | 1 | 3 | 2 |

| 96 | B1 | 1 | 0 | 3,5,7 | 2 | 1 | 6 | 2 |
|---|---|---|---|---|---|---|---|---|
| 97 | B1 | 1 | 0 | 24,29,34,39 | 8 | 1 | 3 | 2 |
| 98 | B1 | 1 | 0 | 9,19,29,39 | 8 | 2 | 3 | 2 |
| 99 | B1 | 1 | 0 | 17,19,37,39 | 2 | 1 | 6 | 2 |
| 100 | B1 | 1 | 0 | 9,19,29,39 | 2 | 2 | 6 | 2 |
| 101 | B1 | 1 | 0 | 7,15,23,31,39 | 2 | 1 | 6 | 2 |
| 102 | B1 | 1 | 0 | 23,27,31,35,39 | 8 | 1 | 3 | 2 |
| 103 | B1 | 1 | 0 | 23,27,31,35,39 | 2 | 1 | 6 | 2 |
| 104 | B1 | 1 | 0 | 3,5,7,9,11,13 | 8 | 1 | 3 | 2 |
| 105 | B1 | 1 | 0 | 4,9,14,19, 24,29,34,39 | 8 | 1 | 3 | 2 |
| 106 | B1 | 1 | 0 | 4,9,14,19, 24,29,34,39 | 2 | 1 | 6 | 2 |
| 107 | B1 | 1 | 0 | 3,7,11,15,19, 23,27,31,35,39 | 8 | 1 | 3 | 2 |
| 108 | B1 | 1 | 0 | 13,14,15, 29, 30,31,37,38,39 | 8 | 2 | 3 | 2 |
| 109 | B1 | 1 | 0 | 3,7,11,15,19, 23,27,31,35,39 | 2 | 1 | 6 | 2 |
| 110 | B1 | 1 | 0 | 1,3,5,7,… ,37,39 | 2 | 1 | 6 | 2 |
| 111 | B1 | 1 | 0 | 0,1,2,…,39 | 8 | 1 | 3 | 2 |
| 112 | B4 | 16 | 1,2 | 4,9,14,19, 24,29,34,39 | 0 | 2 | 1 | 12 |
| 113 | B4 | 16 | 1,2 | 3,7,11,15,19, 23,27,31,35,39 | 0 | 1 | 1 | 12 |
| 114 | B4 | 8 | 1,2 | 4,9,14,19, 24,29,34,39 | 0 | 2 | 1 | 12 |

| 115 | B4 | 8 | 1,2 | 3,7,11,15,19, 23,27,31,35,39 | 0 | 1 | 1 | 12 |
|---|---|---|---|---|---|---|---|---|
| 116 | B4 | 8 | 1,2 | 9,19,29,39 | 0 | 2 | 1 | 12 |
| 117 | B4 | 4 | 1 | 4,9,14,19, 24,29,34,39 | 0 | 1 | 1 | 12 |

| 118 | B4 | 4 | 1 | 4,9,14,19, 24,29,34,39 | 0 | 2 | 1 | 12 |
|---|---|---|---|---|---|---|---|---|
| 119 | B4 | 4 | 1,2 | 3,7,11,15,19, 23,27,31,35,39 | 0 | 1 | 1 | 12 |
| 120 | B4 | 2 | 1 | 7,15,23,31,39 | 2 | 2 | 1 | 12 |
| 121 | B4 | 2 | 1 | 4,9,14,19, 24,29,34,39 | 0 | 1 | 1 | 12 |
| 122 | B4 | 2 | 1 | 4,9,14,19, 24,29,34,39 | 0 | 2 | 1 | 12 |
| 123 | B4 | 2 | 1 | 3,7,11,15,19, 23,27,31,35,39 | 0 | 1 | 1 | 12 |
| 124 | B4 | 1 | 0 | 19, 39 | 2 | 2 | 1 | 12 |
| 125 | B4 | 1 | 0 | 17, 19, 37, 39 | 0 | 1 | 1 | 12 |
| 126 | B4 | 1 | 0 | 24,29,34,39 | 2 | 1 | 1 | 12 |
| 127 | B4 | 1 | 0 | 9,19,29,39 | 2 | 2 | 1 | 12 |
| 128 | B4 | 1 | 0 | 9,19,29,39 | 0 | 2 | 1 | 12 |
| 129 | B4 | 1 | 0 | 7,15,23,31,39 | 0 | 1 | 1 | 12 |
| 130 | B4 | 1 | 0 | 7,15,23,31,39 | 0 | 2 | 1 | 12 |
| 131 | B4 | 1 | 0 | 23,27,31,35,39 | 0 | 1 | 1 | 12 |
| 132 | B4 | 1 | 0 | 23,27,31,35,39 | 2 | 2 | 1 | 12 |
| 133 | B4 | 1 | 0 | 9,11,13,15,17,19 | 0 | 1 | 1 | 12 |
| 134 | B4 | 1 | 0 | 3,5,7,9,11,13 | 2 | 1 | 1 | 12 |
| 135 | B4 | 1 | 0 | 4,9,14,19, 24,29,34,39 | 0 | 1 | 1 | 12 |
| 136 | B4 | 1 | 0 | 4,9,14,19, 24,29,34,39 | 2 | 2 | 1 | 12 |
| 137 | B4 | 1 | 0 | 13,14,15, 29, 30,31,37,38,39 | 2 | 2 | 1 | 12 |
| 138 | B4 | 1 | 0 | 3,7,11,15,19, 23,27,31,35,39 | 0 | 1 | 1 | 12 |
| 139 | B4 | 1 | 0 | 3,7,11,15,19, | 2 | 1 | 1 | 12 |

|     |     |     |     | 23,27,31,35,39 |     |     |     |     |
| --- | --- | --- | --- | --- | --- | --- | --- | --- |
| 140 | B4 | 1 | 0 | 3, 5, 7, …, 23,25 | 2 | 1 | 1 | 12 |
| 141 | B4 | 1 | 0 | 3, 5, 7, …, 23,25 | 0 | 2 | 1 | 12 |
| 142 | B4 | 1 | 0 | 1,3,5,7,…, 37,39 | 0 | 1 | 1 | 12 |
| 143 | B4 | 1 | 0 | 0, 1, 2,…, 39 | 2 | 1 | 1 | 12 |
| 144 | C0 | 16 | 1 | 4,9,14,19, 24,29,34,39 | 0 | 2 | 7 | 2 |
| 145 | C0 | 16 | 1 | 3,7,11,15,19, 23,27,31,35,39 | 0 | 1 | 7 | 2 |
| 146 | C0 | 8 | 1 | 4,9,14,19,24, 29,34,39 | 0 | 1 | 7 | 2 |
| 147 | C0 | 8 | 1 | 3,7,11,15,19 ,23,27,31,35,39 | 0 | 1 | 7 | 2 |
| 148 | C0 | 8 | 1,2 | 9,19,29,39 | 0 | 2 | 7 | 2 |
| 149 | C0 | 4 | 1 | 4,9,14,19, 24,29,34,39 | 0 | 1 | 7 | 2 |
| 150 | C0 | 4 | 1 | 4,9,14,19, 24,29,34,39 | 0 | 2 | 7 | 2 |
| 151 | C0 | 4 | 1 | 3,7,11,15,19, 23,27,31,35,39 | 0 | 1 | 7 | 2 |
| 152 | C0 | 2 | 1 | 7,15,23,31,39 | 0 | 2 | 7 | 2 |
| 153 | C0 | 2 | 1 | 4,9,14,19, 24,29,34,39 | 0 | 1 | 7 | 2 |
| 154 | C0 | 2 | 1 | 4,9,14,19, 24,29,34,39 | 0 | 2 | 7 | 2 |
| 155 | C0 | 2 | 1 | 3,7,11,15,19, 23,27,31,35,39 | 0 | 1 | 7 | 2 |
| 156 | C0 | 1 | 0 | 19,39 | 8 | 1 | 3 | 2 |
| 157 | C0 | 1 | 0 | 3,5,7 | 0 | 1 | 7 | 2 |
| 158 | C0 | 1 | 0 | 24,29,34,39 | 8 | 1 | 3 | 2 |
| 159 | C0 | 1 | 0 | 9,19,29,39 | 8 | 2 | 3 | 2 |
| 160 | C0 | 1 | 0 | 17,19,37,39 | 0 | 1 | 7 | 2 |
| 161 | C0 | 1 | 0 | 9,19,29,39 | 0 | 2 | 7 | 2 |
| 162 | C0 | 1 | 0 | 23,27,31,35,39 | 8 | 1 | 3 | 2 |

| 163 | C0 | 1 | 0 | 7,15,23,31,39 | 0 | 1 | 7 | 2 |
|---|---|---|---|---|---|---|---|---|
| 164 | C0 | 1 | 0 | 23,27,31,35,39 | 0 | 1 | 7 | 2 |
| 165 | C0 | 1 | 0 | 3,5,7,9,11,13 | 8 | 1 | 3 | 2 |
| 166 | C0 | 1 | 0 | 4,9,14,19, 24,29,34,39 | 8 | 1 | 3 | 2 |
| 167 | C0 | 1 | 0 | 4,9,14,19, 24,29,34,39 | 0 | 1 | 7 | 2 |
| 168 | C0 | 1 | 0 | 13,14,15, 29, 30,31,37,38,39 | 8 | 2 | 3 | 2 |
| 169 | C0 | 1 | 0 | 3,7,11,15,19, 23,27,31,35,39 | 8 | 1 | 3 | 2 |
| 170 | C0 | 1 | 0 | 3,7,11,15,19, 23,27,31,35,39 | 0 | 1 | 7 | 2 |
| 171 | C0 | 1 | 0 | 1,3,5,7 ,…,37,39 | 0 | 1 | 7 | 2 |
| 172 | C0 | 1 | 0 | 0,1,2, …,39 | 8 | 1 | 3 | 2 |
| 173 | C2 | 16 | 1 | 4,9,14,19, 24,29,34,39 | 0 | 2 | 2 | 6 |
| 174 | C2 | 16 | 1 | 3,7,11,15,19, 23,27,31,35,39 | 0 | 1 | 2 | 6 |
| 175 | C2 | 8 | 1 | 4,9,14,19, 24,29,34,39 | 0 | 2 | 2 | 6 |
| 176 | C2 | 8 | 1 | 3,7,11,15,19, 23,27,31,35,39 | 0 | 1 | 2 | 6 |
| 177 | C2 | 8 | 1,2 | 9,19,29,39 | 0 | 2 | 2 | 6 |
| 178 | C2 | 4 | 1 | 4,9,14,19, 24,29,34,39 | 0 | 1 | 2 | 6 |
| 179 | C2 | 4 | 1 | 4,9,14,19, 24,29,34,39 | 0 | 2 | 2 | 6 |
| 180 | C2 | 4 | 1 | 3,7,11,15,19, 23,27,31,35,39 | 0 | 1 | 2 | 6 |
| 181 | C2 | 2 | 1 | 7,15,23,31,39 | 2 | 2 | 2 | 6 |
| 182 | C2 | 2 | 1 | 4,9,14,19, 24,29,34,39 | 0 | 1 | 2 | 6 |
| 183 | C2 | 2 | 1 | 4,9,14,19, 24,29,34,39 | 0 | 2 | 2 | 6 |
| 184 | C2 | 2 | 1 | 3,7,11,15,19, 23,27,31,35,39 | 0 | 1 | 2 | 6 |
| 185 | C2 | 1 | 0 | 19,39 | 2 | 1 | 2 | 6 |

| 186 | C2 | 1 | 0 | 3,5,7 | 0 | 1 | 2 | 6 |
|---|---|---|---|---|---|---|---|---|
| 187 | C2 | 1 | 0 | 24,29,34,39 | 7 | 1 | 1 | 6 |
| 188 | C2 | 1 | 0 | 9,19,29,39 | 7 | 2 | 1 | 6 |
| 189 | C2 | 1 | 0 | 17,19,37,39 | 0 | 1 | 2 | 6 |
| 190 | C2 | 1 | 0 | 9,19,29,39 | 2 | 2 | 2 | 6 |
| 191 | C2 | 1 | 0 | 7,15,23, 31,39 | 2 | 1 | 2 | 6 |
| 192 | C2 | 1 | 0 | 3,5,7,9,11,13 | 7 | 1 | 1 | 6 |
| 193 | C2 | 1 | 0 | 23,27,31,35,39 | 7 | 2 | 1 | 6 |
| 194 | C2 | 1 | 0 | 23,27,31,35,39 | 0 | 1 | 2 | 6 |
| 195 | C2 | 1 | 0 | 4,9,14,19,24, 29,34,39 | 7 | 2 | 1 | 6 |
| 196 | C2 | 1 | 0 | 4,9,14,19, 24,29,34,39 | 2 | 1 | 2 | 6 |
| 197 | C2 | 1 | 0 | 13,14,15, 29, 30,31,37,38,39 | 7 | 2 | 1 | 6 |
| 198 | C2 | 1 | 0 | 3,7,11,15,19, 23,27,31,35,39 | 7 | 1 | 1 | 6 |
| 199 | C2 | 1 | 0 | 3,7,11,15,19, 23,27,31,35,39 | 0 | 1 | 2 | 6 |
| 200 | C2 | 1 | 0 | 1,3,5,7, …,37,39 | 0 | 1 | 2 | 6 |
| 201 | C2 | 1 | 0 | 0,1,2,…,39 | 7 | 1 | 1 | 6 |
| 202 | A1/B1 | 16 | 1 | 4,9,14,19,24, 29,34,39 | 2 | 1 | 6 | 2 |
| 203 | A1/B1 | 16 | 1 | 3,7,11,15,19 ,23,27,31,35,39 | 2 | 1 | 6 | 2 |
| 204 | A1/B1 | 8 | 1 | 4,9,14,19 ,24,29,34,39 | 2 | 1 | 6 | 2 |

| 205 | A1/B1 | 8 | 1 | 3,7,11,15,19, 23,27,31,35,39 | 2 | 1 | 6 | 2 |
|---|---|---|---|---|---|---|---|---|
| 206 | A1/B1 | 4 | 1 | 4,9,14,19, 24,29,34,39 | 2 | 1 | 6 | 2 |
| 207 | A1/B1 | 4 | 1 | 3,7,11,15,19, 23,27,31,35,39 | 2 | 1 | 6 | 2 |
| 208 | A1/B1 | 2 | 1 | 4,9,14,19,24,29,34,39 | 2 | 1 | 6 | 2 |
| 209 | A1/B1 | 1 | 0 | 19,39 | 8 | 1 | 3 | 2 |
| 210 | A1/B1 | 1 | 0 | 9,19,29,39 | 8 | 1 | 3 | 2 |

| 211 | A1/B1 | 1 | 0 | 17,19,37,39 | 2 | 1 | 6 | 2 |
|---|---|---|---|---|---|---|---|---|
| 212 | A1/B1 | 1 | 0 | 9,19,29,39 | 2 | 2 | 6 | 2 |
| 213 | A1/B1 | 1 | 0 | 23,27,31,35,39 | 8 | 1 | 3 | 2 |
| 214 | A1/B1 | 1 | 0 | 7,15,23,31,39 | 2 | 1 | 6 | 2 |
| 215 | A1/B1 | 1 | 0 | 23,27,31,35,39 | 2 | 1 | 6 | 2 |
| 216 | A1/B1 | 1 | 0 | 4,9,14,19, 24,29,34,39 | 8 | 1 | 3 | 2 |
| 217 | A1/B1 | 1 | 0 | 4,9,14,19, 24,29,34,39 | 2 | 1 | 6 | 2 |
| 218 | A1/B1 | 1 | 0 | 3,7,11,15,19, 23,27,31,35,39 | 2 | 1 | 6 | 2 |
| 219 | A1/B1 | 1 | 0 | 1,3,5,7 ,…,37,39 | 2 | 1 | 6 | 2 |
| 220 | A2/B2 | 16 | 1 | 4,9,14,19 ,24,29,34,39 | 2 | 1 | 3 | 4 |
| 221 | A2/B2 | 16 | 1 | 3,7,11,15,19, 23,27,31,35,39 | 2 | 1 | 3 | 4 |
| 222 | A2/B2 | 8 | 1 | 4,9,14,19, 24,29,34,39 | 2 | 1 | 3 | 4 |
| 223 | A2/B2 | 8 | 1 | 3,7,11,15,19, 23,27,31,35,39 | 2 | 1 | 3 | 4 |
| 224 | A2/B2 | 4 | 1 | 4,9,14,19, 24,29,34,39 | 2 | 1 | 3 | 4 |
| 225 | A2/B2 | 4 | 1 | 3,7,11,15,19, 23,27,31,35,39 | 2 | 1 | 3 | 4 |

| 226 | A2/B2 | 2 | 1 | 4,9,14,19, 24,29,34,39 | 2 | 1 | 3 | 4 |
|---|---|---|---|---|---|---|---|---|
| 227 | A2/B2 | 1 | 0 | 19,39 | 6 | 1 | 2 | 4 |
| 228 | A2/B2 | 1 | 0 | 9,19,29,39 | 6 | 1 | 2 | 4 |
| 229 | A2/B2 | 1 | 0 | 17,19,37,39 | 2 | 1 | 3 | 4 |
| 230 | A2/B2 | 1 | 0 | 9,19,29,39 | 2 | 2 | 3 | 4 |
| 231 | A2/B2 | 1 | 0 | 23,27,31,35,39 | 6 | 1 | 2 | 4 |
| 232 | A2/B2 | 1 | 0 | 7,15,23,31,39 | 2 | 1 | 3 | 4 |
| 233 | A2/B2 | 1 | 0 | 23,27,31,35,39 | 2 | 1 | 3 | 4 |
| 234 | A2/B2 | 1 | 0 | 4,9,14,19, 24,29,34,39 | 6 | 1 | 2 | 4 |

| 235 | A2/B2 | 1 | 0 | 4,9,14,19,24,29,34,39 | 2 | 1 | 3 | 4 |
|---|---|---|---|---|---|---|---|---|
| 236 | A2/B2 | 1 | 0 | 3,7,11,15,19,23,27,31,35,39 | 2 | 1 | 3 | 4 |
| 237 | A2/B2 | 1 | 0 | 1,3,5,7,…,37,39 | 2 | 1 | 3 | 4 |
| 238 | A3/B3 | 16 | 1 | 4,9,14,19,24,29,34,39 | 2 | 1 | 2 | 6 |
| 239 | A3/B3 | 16 | 1 | 3,7,11,15,19,23,27,31,35,39 | 2 | 1 | 2 | 6 |
| 240 | A3/B3 | 8 | 1 | 4,9,14,19,24,29,34,39 | 2 | 1 | 2 | 6 |
| 241 | A3/B3 | 8 | 1 | 3,7,11,15,19,23,27,31,35,39 | 2 | 1 | 2 | 6 |
| 242 | A3/B3 | 4 | 1 | 4,9,14,19,24,29,34,39 | 2 | 1 | 2 | 6 |
| 243 | A3/B3 | 4 | 1 | 3,7,11,15,19,23,27,31,35,39 | 2 | 1 | 2 | 6 |
| 244 | A3/B3 | 2 | 1 | 4,9,14,19,24,29,34,39 | 2 | 1 | 2 | 6 |
| 245 | A3/B3 | 1 | 0 | 19,39 | 2 | 1 | 2 | 6 |
| 246 | A3/B3 | 1 | 0 | 9,19,29,39 | 2 | 1 | 2 | 6 |
| 247 | A3/B3 | 1 | 0 | 17,19,37,39 | 2 | 1 | 2 | 6 |
| 248 | A3/B3 | 1 | 0 | 9,19,29,39 | 2 | 2 | 2 | 6 |

| 249 | A3/B3 | 1 | 0 | 7,15,23,31,39 | 2 | 1 | 2 | 6 |
|---|---|---|---|---|---|---|---|---|
| 250 | A3/B3 | 1 | 0 | 23,27,31,35,39 | 2 | 1 | 2 | 6 |
| 251 | A3/B3 | 1 | 0 | 23,27,31,35,39 | 2 | 2 | 2 | 6 |
| 252 | A3/B3 | 1 | 0 | 4,9,14,19,24,29,34,39 | 2 | 1 | 2 | 6 |
| 253 | A3/B3 | 1 | 0 | 4,9,14,19,24,29,34,39 | 2 | 2 | 2 | 6 |
| 254 | A3/B3 | 1 | 0 | 3,7,11,15,19,23,27,31,35,39 | 2 | 1 | 2 | 6 |
| 255 | A3/B3 | 1 | 0 | 1,3,5,7,…,37,39 | 2 | 1 | 2 | 6 |

For example, in embodiments described below, the ROs may be ROs based on one of Tables 2 to 4 above.

The contents described above can be applied by being combined with methods according to the present disclosure described below, or can be supplemented to clarify technical features of methods described in the present disclosure.

In addition, methods related to configuration of a PRACH transmission occasion described below are related to uplink transmission and can be equally applied to an uplink signal transmission method in the NR system (licensed band) or U-Band system (unlicensed band) described above. The technical ideas described in the present disclosure can be modified or replaced to suit terms, expressions, structures, etc. defined in each system so that they can be implemented in the corresponding systems.

For example, the uplink transmission through the methods related to configuration of the PRACH transmission occasion described below can be performed in an L-cell (cell operating in the licensed band (L-band)) and/or a U-cell (cell operating in the unlicensed band (U-band)) defined in the NR system or the U-Band system.

NR supports multiple numerologies (or subcarrier spacing (SCS)) for supporting diverse 5G services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz to overcome phase noise.

An NR frequency band is defined as two types of frequency ranges FR1 and FR2. FR1 and FR2 may be configured as shown in Table 5 below. FR2 may mean millimeter wave (mmW).

[Table 5]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Meanwhile, repeated transmission of the PRACH preamble is considered for UL coverage enhancement of an existing NR system. Meanwhile, an RA-RNTI equation and an MSGB-RNTI equation applied for a current FR1/2 region are defined as shown in Table 6 below.

[Table 6]

5.1.3 Random Access Preamble transmission

The RA-RNTI associated with the PRACH occasion in which the Random Access Preamble is transmitted or the RA-RNTI associated with the last valid PRACH occasion in the set of PRACH occasions (as specified in TS 38.213 [6]) for Msg1 repetition, is computed as:

$$RA\text{-}RNTI = 1 + s\_id + 14 \times t\_id + 14 \times 80 \times f\_id + 14 \times 80 \times 8 \times ul\_carrier\_id$$

where s_id is the index of the first OFDM symbol of the PRACH occasion ($0 \le s\_id < 14$), t_id is the index of the first slot of the PRACH occasion in a system frame ($0 \le t\_id < 80$), where the subcarrier spacing to determine t_id is based on the value of $\mu$ specified in clause 5.3.2 in TS 38.211 [8], f_id is the index of the PRACH occasion in the frequency domain ($0 \le f\_id < 8$), and ul_carrier_id is the UL carrier used for Random Access Preamble transmission (0 for NUL carrier, and 1 for SUL carrier).

5.1.3a MSGA transmission

The MSGB-RNTI associated with the PRACH occasion in which the Random Access Preamble is transmitted, is computed as:

$$MSGB\text{-}RNTI = 1 + s\_id + 14 \times t\_id + 14 \times 80 \times f\_id + 14 \times 80 \times 8 \times ul\_carrier\_id + 14 \times 80 \times 8 \times 2$$

where s_id is the index of the first OFDM symbol of the PRACH occasion ($0 \le s\_id < 14$), t_id is the index of the first slot of the PRACH occasion in a system frame ($0 \le t\_id < 80$), where the subcarrier spacing to determine t_id is based on the value of $\mu$ specified in clause 5.3.2 in TS 38.211 [8], f_id is the index of the PRACH occasion in the frequency domain ($0 \le f\_id < 8$), and ul_carrier_id is the UL carrier used for Random Access Preamble transmission (0 for NUL carrier, and 1 for SUL carrier). The RA-RNTI is calculated as specified in clause 5.1.3.

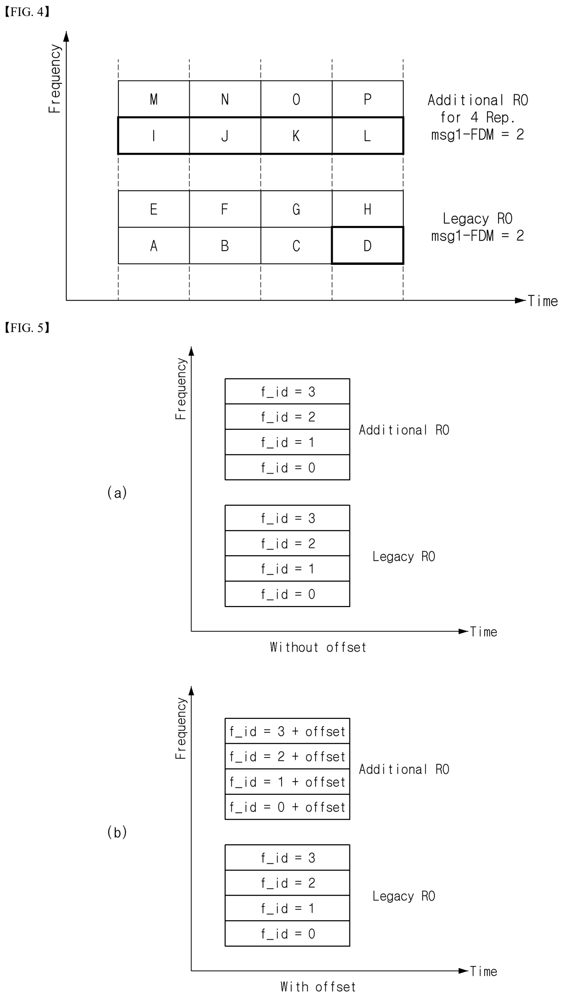

In this case, when the eNB allocates an additional RACH configuration to the UE for PRACH repetition transmission, the corresponding RACH resource and the RACH resource allocated through the legacy RACH configuration may be frequency division multiplexed (FDMed) and allocated at the same time instance. This creates a problem where RA-RNTI values to be expected between the UE and the eNB may become identical. As a specific example, ROs may be configured as illustrated in FIG. 4.

FIG. 4 is a diagram illustrating a case where RA-RNTIs overlap.

Referring to FIG. 4, it may be assumed that a legacy RACH configuration (i.e., single PRACH TX) and an additional RACH configuration (i.e., multiple PRACH TX) are allocated to separated ROs (i.e., separated RACH configuration). In other words, ROs based on the RACH configuration for single PRACH transmission (legacy ROs) (A to H) and ROs based on the RACH configuration for PRACH repetition transmission (additional ROs) (I to P) may be configured separately. In this case, a plurality of ROs corresponding to different RACH configurations may be FDMed and allocated at a same time instance. In this case, UE1 and UE2 may perform PRACH transmission and RA-RNTI calculation as follows.

UE1 may perform PRACH repetition with a repetition factor of 4 by selecting RO I, RO J, RO K, and RO L and calculate the RA-RNTI based on RO L. UE2 may perform a single PRACH transmission using RO D and calculate the RA-RNTI based on RO D. UE1 and UE2 start RAR window monitoring at a same time instance, and RA-RNTI values expected by UE1 and UE2 will be the same (assuming both configurations have msg1 - FDM = 2). Here, msg1 - FDM indicates a number of PRACH occasions that are FDMed in one time instance.

As a result, both UE1 and UE2 expect and operate under the assumption that the RAR forwarded based on the PDSCH scheduled based on DCI format 1_0 scrambled with the same RA-RNTI will be an appropriate RAR for each UE. Therefore, one of UE1 and UE2 fails to receive the appropriate RAR in time. This consequently results in increased latency of the RACH procedure.

In order to address this problem, the present disclosure proposes a method for resolving a problem in that RA-RNTIs overlap when a PRACH (Msg. A) preamble repetition operation is defined.

RA-RNTI collision handling for PRACH repeated transmission.

[Method 1]

A method for introducing a frequency RO index offset within a parameter for an additional RACH configuration may be considered. The additional RACH configuration may be configured through higher layer signaling (e.g., SIB1). This will be described in detail below.

An offset parameter for changing a frequency index of an RO may be additionally introduced into the parameter (e.g., AdditionalRACH-Config-rl7) for the additional RACH configuration.

As an example, the eNB may configure/indicate, to the UE, an FDMed RO index offset related parameter (e.g., msg1-FDM-index-offset) through the parameter for the additional RACH configuration. In this case, taking into account all RACH configurations provided within the cell, the eNB may indicate an offset value so that a maximum total number of ROs that may be FDMed in the same time instance does not exceed 8.

When the FDMed RO index offset related parameter (e.g., msg1-FDM-index-offset) is configured/indicated within a parameter for an additional RACH configuration (e.g., Additional RACH-Config-r17), the UE and the eNB may be configured to additionally apply the corresponding offset value when calculating the RA-RNTI. A specific UE operation will be described as follows.

According to a legacy operation for RA-RNTI calculation, the UE uses a frequency index corresponding to an arbitrary RO selected at an MAC layer among the FDMed ROs allocated by the eNB as an f_id value.

As an example, according to the embodiment, when the FDMed RO index offset related parameter (e.g., msgl-FDM-index-offset) is configured/indicated to the UE from the eNB, the UE may be configured to add an additionally indicated msg1-FDM-index-offset to an arbitrary RO (e.g., a last RO among ROs) selected at the MAC layer, and use the corresponding value as the f_id value.

f_id according to the embodiment may be determined/defined as follows.

$$\text{f\_id} = \text{frequency index of RO} + \text{msg1-FDM-index-offset}$$

As an example, according to the embodiment, the frequency index (i.e., f_id) may be defined/determined according to an order of the selected RO among the FDMed ROs based on the FDMed RO index offset related parameter (e.g., msg1-FDM-index-offset) configured/indicated by the eNB (starting from the value). As a specific example, when the RA-RNTI is calculated based on a first RO among the FDMed ROs, f_id may be determined/defined as msgl-FDM-index-offset+0. When the RA-RNTI is calculated based on a second RO among the FDMed ROs, f_id may be determined/defined as msg1-FDM-index-offset+1. Characteristically, an actual frequency position of the ROs allocated through the corresponding additional RACH configuration may be determined through an msgl-FDM value and msgl-FrequencyStart similarly to the legacy UE operation.

A specific example of the proposed method may be illustrated as in FIG. 5. FIG. 5 is a diagram illustrating f_id for calculation of the RA-RNTI according to one embodiment of the present disclosure.

FIG. 5A illustrates f_id determined/defined without the FDMed RO index offset. FIG. 5B illustrates f_id determined/defined based on the FDMed RO index offset according to one embodiment of the present disclosure. Hereinafter, specific examples of the configuration/operation related to the offset (msg1-FDM-index-offset value) will be described.

As an example, it may be assumed that the eNB assigns only two RACH configurations (i.e., legacy RACH configuration and one additional RACH configuration) to the corresponding cell, the msgl-FDM value of the legacy RACH configuration is 4, and the msgl-FDM value of the additional RACH configuration is 4. In this case, the msgl-FDM-index-offset value of the additional RACH configuration may be set to 4.

As an example, the eNB may configure/indicate, to the UE, using the msgl-FDM value of the legacy RACH configuration as the msgl-FDM-index-offset of the additional RACH configuration.

As an example, the eNB may configured/indicate, to the UE, whether to enable/disable the FDM offset using a separate parameter. When it is indicated by the eNB that the FDM offset is enabled, the UE may operate as follows. When the msgl-FDM-index-offset value is indicated, the UE may use the msgl-FDM-index-offset value. When the msgl-FDM-index-offset is not indicated, the UE may be configured to use the msgl-FDM value of the legacy RACH configuration as the msgl-FDM-index-offset value. As a specific example, it may be assumed that the msgl-FDM-index-offset value is 4 and the frequency index value of the RO arbitrarily selected by the UE through the MAC layer is 2. When the UE (eNB) transmits (receives) the PRACH based on the corresponding RO, the f_id value used for the RA-RNTI may be 6.

[Method 2]

A method for configuring/indicating an OFDM symbol index value for calculating s_id of the RA-RNTI within the parameter for the additional RACH configuration may be considered. The additional RACH configuration may be configured through higher layer signaling (e.g., SIB1). This will be described in detail below.

According to the legacy UE/eNB operation, when calculating the RA-RNTI, a first OFDM symbol index of the RO in which the preamble is transmitted/received is defined to be used as the s_id value. However, since PRACH formats defined in NR use at least two OFDM symbols per RO, some RA-RNTI values may remain unused within a specific cell depending on the RACH configuration. Therefore, the eNB may configure/indicate, to the UE, using remaining RA-RNTI values for the RO allocated by the additional RACH configuration.

A method may be considered in which the eNB indicates an s_id (i.e., OFDM symbol index) value to be used for RA-RNTI calculation within the higher layer signaling (e.g., SIB1) for the additional RACH configuration or within the parameter for the additional RACH configuration. This will be described in detail below.

The eNB may select a value to be used as the s_id based on a total number of OFDM symbols within one RO for a PRACH format configured through a specific RACH configuration. That is, the eNB may indicate, to the UE, an N-th OFDM symbol within the RO to be used for the s_id.

As an example, the eNB may indicate an OFDM symbol for the s_id to the UE in forms such as a 1st OFDM symbol of RO, a 2nd OFDM symbol of RO, a 3rd OFDM symbol of RO, a last OFDM symbol of RO, etc. When such a parameter is indicated, the UE and the eNB may be configured to use the s_id value as the OFDM symbol index value corresponding to the indicated OFDM symbol position of the corresponding RO when calculating the RA-RNTI. That is, when the second OFDM symbol of RO is indicated based on the parameter, the s_id for calculating the RA-RNTI may be determined/defined as an index of the second OFDM symbol of RO. When the eNB does not separately indicate the parameter to the UE, the first OFDM symbol index of the corresponding RO may be configured/defined to be used as the s_id when calculating the RA-RNTI, similar to the legacy UE/eNB operation.

As an example, when the PRACH is transmitted/received based on an RO of an additional RACH configuration, a specific N-th OFDM symbol of the corresponding RO for the s_id value may be predefined to be used when calculating the RA-RNTI. As a specific example, the specific N-th OFDM symbol may be a last OFDM symbol of the corresponding RO. As another example, the N value may be predefined as 2 or 3, etc., indicating which position OFDM symbol within the specific RO. When the s_id value is predefined for the RA-RNTI calculation for the additional RACH configuration as described above, the UE and the eNB may be configured/defined to operate as follows. The UE/eNB may use the OFDM symbol index corresponding to the predefined OFDM symbol position of the corresponding RO as the s_id value when calculating the RA-RNTI.

[Method 3]

A method for providing additional information for distinguishing RACH configurations through configurations for other signals/channels may be provided.

The eNB may separately configure/indicate additional information for distinguishing a legacy RACH configuration and an additional RACH configuration in a specific signal/channel.

As an example, based on a reserved 1 bit field of an MAC payload within an RAR that schedules an Msg. 3 PUSCH, a configured related to the corresponding RAR may be indicated/configured as the legacy RACH configuration or the additional RACH configuration. In other words, if the reserved 1-bit field value in the MAC payload within the RAR is set to 0, the corresponding RAR may be indicated/determined as the RAR for the legacy RACH configuration. If the reserved

1-bit field value in the MAC payload within the RAR is set to 1, the corresponding RAR may be indicated/determined as the RAR for the additional RACH configuration.

Since the corresponding reserved field has only 1 bit, when a plurality of additional RACH configurations are allocated, it may be difficult to distinguish the additional RACH configuration from the legacy RACH configuration. In other words, when the plurality of additional RACH configurations are allocated to overlap with the legacy RACH configuration at a specific time instance, it may be difficult to distinguish all different configurations from each other. In such a case, following embodiments may be considered.

As an example, a following field may be utilized to distinguish whether the configuration related to RAR is the legacy RACH configuration or the additional RACH configuration. Specifically, when DCI format 1_0 is scrambled with the RA-RNTI, some of reserved fields of the corresponding DCI format 1_0 may be used as an RACH configuration indication field. That is, the legacy RACH configuration from k additional RACH configurations may be configured/indicated to be distinguished by using an N bit field(s) of the reserved field. In other words, one of the legacy RACH configuration and k additional RACH configurations may be indicated based on a value of the N bit field(s).

In this case, the N value may be determined as N = ceil(log2(1 + k)). N MSB bits (or LSB bits) of the reserved field may be used as the RACH configuration indication field.

Assuming k = 3, the N value may be determined as 2 (= ceil(log2(1 + 3))). The RACH configuration may be indicated as follows by a value of a 2 bit field.

{00, 01, 10, 11} = {legacy RACH configuration, additional RACH configuration #1, additional RACH configuration #2, additional RACH configuration #3} may be represented.

Assuming k = 2, the N value may be determined as 2 (= ceil(log2(1 + 2))). The RACH configuration may be indicated as follows by the value of the 2 bit field.

{00, 01, 10, 11} = {legacy RACH configuration, additional RACH configuration #1, additional RACH configuration #2, reserved}

As an example, the k additional RACH configurations may be all additional RACH configurations which the eNB configures in the corresponding cell.

As an example, the k additional RACH configurations may be additional RACH configurations that may be placed by FDM with the legacy RACH configuration at any time instance.

Based on the additional information (i.e., information indicating the RACH configuration), the UE may operate as follows.

The UE confirms an RA-RNTI value scrambled to DCI format 1_0 and additionally confirms the additional information. When the RACH configuration indicated based on the additional information is an RACH configuration corresponding to the RO selected by the UE, the UE may be configured to interpret the corresponding RAR. That is, the UE may receive/interpret the RAR based on the PDSCH scheduled by the corresponding DCI format.

However, since UEs prior to Rel-17 may not interpret the additional information, the UEs will attempt to interpret the RAR if only the RA-RNTI scrambled to DCI format 1_0 matches.. In consideration of this, a following embodiment may be additionally applied. The eNB may transmit the RAR for the legacy RACH configuration (i.e., DCI format 1_0 with RA-RNTI that schedules the corresponding RAR) before the RAR for the additional RACH configuration.

[Method 4]

A method for configuring different RA-RNTIs to be used according to the RACH configuration may be considered.

Since the aforementioned problem is caused by identical RA-RNTIs, a method for configuring the RA-RNTI for the additional RACH configuration independently from the RA-RNTI for the legacy RACH configuration may be considered.

As an example, RA-RNTIs for multiple PRACHs among the additional RACH configurations may be independently configured/defined. Specifically, the RA-RNTI may be defined to be calculated based on Equation 1 below.

$$\text{Enhanced RA-RNTI} = 1 + s\_id + 14 \times t\_id + 14 \times 80 \times f\_id + 14 \times 80 \times 8 \times ul\_carrier\_id + 14 \times 80 \times 8 \times 2 \times \text{additional RACH configuration index} \qquad \text{[Equation 1]}$$

As an example, the additional RACH configuration index may be an index that considers all additional RACH configurations allocated within the corresponding cell.

As an example, the additional RACH configuration index may be an index that considers only the additional RACH configurations where ROs are allocated in an FDM form with a single PRACH at a specific time instance. Characteristically, index values of the additional RACH configurations corresponding to the consideration target may be configured/indicated as follows. The eNB may configure/indicate the index values of the additional RACH configurations corresponding to the consideration target to not overlap each other using sequentially increasing positive integers starting from 1. Hereinafter, assuming that a number of additional RACH configurations is 3, the index according to the embodiment may be configured/indicated as follows. Index 1 may be configured/indicated for additional RACH configuration #1. Index 2 may be configured/indicated for additional RACH configuration #2. Index 3 may be configured/indicated for additional RACH configuration #3.

As an example, the index for the RACH configuration may be defined/configured by mapping in ascending (or descending) order of repetition number values configured/indicated in the RACH configuration, with the index incrementally assigned starting from 1. Hereinafter, assuming that the number of additional RACH configurations is 3, the index for the additional RACH configuration may be configured/indicated as follows.

The repetition number may be assumed to be configured as follows. A repetition number based on additional RACH configuration #1 may be 2, a repetition number based on additional RACH configuration #2 may be 4, and a repetition number based on additional RACH configuration #3 may be 8. In this case, Index 1 may be configured/indicated for additional RACH configuration #1. Index 2 may be configured/indicated for additional RACH configuration #2. Index 3 may be configured/indicated for additional RACH configuration #3.

[Method 5]

A method for configuring different DL BWPs to be used according to the RACH configuration may be considered.

According to a legacy operation, the legacy RACH configuration and/or additional RACH configurations configured by the eNB are allocated within an initial UL BWP. Thereafter, when the UE transmits a preamble to any RO, the UE is configured to monitor the RAR using a same initial DL BWP regardless of which RACH configuration is selected.

Therefore, a method for configuring DL BWPs on which the UE monitors the RAR to be distinguished for different RACH configurations may be considered to resolve a case where RA-RNTIs overlap for different RACH configurations.

As an example, an additional DL BWP which may monitor the RAR window may be configured/indicated within the additional RACH configuration. That is, when the eNB configures the additional DL BWP, the UE may be configured to monitor the RAR in the DL BWP based on the corresponding configuration. When the eNB does not separately configure the additional DL BWP, the UE may be configured to monitor the RAR using the initial DL BWP as in the legacy operation.

Characteristically, when the eNB configures the additional DL BWP within the additional RACH configuration, the transmission and reception of DL signals/channels of the RACH procedure performed by the UE/eNB may be configured to be performed through the additional DL BWP. When there is no BWP switching instruction from the eNB after the UE enters an RRC connected state, the UE may be configured to continue using the additional DL BWP as the active DL BWP.

Additionally, the eNB may configure/indicate, to the UE, an additional (initial) UL BWP that is independent of the initial UL BWP. In this case, the eNB may configure the legacy RACH configuration to be allocated within the initial UL BWP. The eNB may separately configure/indicate, to the UE, which UL BWP the additional RACH configuration is allocated to among the initial UL BWP and/or the additional (initial) UL BWP.

In the absence of the separate configuration/indication information, the UE may interpret that the additional RACH configuration is allocated to the initial UL BWP and operate like the legacy operation. When the eNB configures the additional RACH configuration to be allocated to the additional (initial) UL BWP, the UE may interpret and operate under the assumption that the corresponding RACH resources are allocated to the additional (initial) UL BWP. Thereafter, the initial DL BWP may also be separately configured/indicated as in the proposed method above.

Meanwhile, when ROs corresponding to a plurality of RACH configurations are configured in an FDMed form, preamble index sets may be allocated/configured so that Random Access Preamble Identities (RAPIDs) are distinguished. Specifically, when the UE receives RARs, the eNB may distinguish and configure preamble index sets available for each RACH configuration so that the preamble index sets may be distinguished through the RAPID even if RA-RNTIs are identical.

As an example, 32 RAPIDs 0 to 31 may be configured to be used in the RO of the legacy RACH configuration. 32 RAPIDs 32 to 63 may be configured to be used in the RO of the additional RACH configuration.

Although the proposed method is primarily proposed considering the calculation of the RA-RNTI, the proposed method may be applied in the same/similar manner when calculating the MSGB-RNTI. Further, the proposed method may be configured/applied to another UL signal/channel such as PUSCH/PUCCH, etc. Further, it is obvious that since the examples of the proposed method described above may also be included as one of implementing methods of the present disclosure, the examples may be regarded as a kind of proposed methods. Further, the proposed methods described above may be independently implemented, but implemented in combination (or merge) of some of the proposed methods. A rule is defined so that the eNB notifies, to the UE, information regarding whether to apply the proposed methods (or information on rules of the proposed methods) through a signal (e.g., a physical layer signal or a higher layer signal) defined in advance. A higher layer may include, for example, one or more of functional layers such as MAC, RLC, PDCP, RRC, and SDAP.

The methods, embodiments or descriptions for implementing the method proposed in the present disclosure may be applied separately, or one or more methods (or embodiments or descriptions) may be applied in combination.

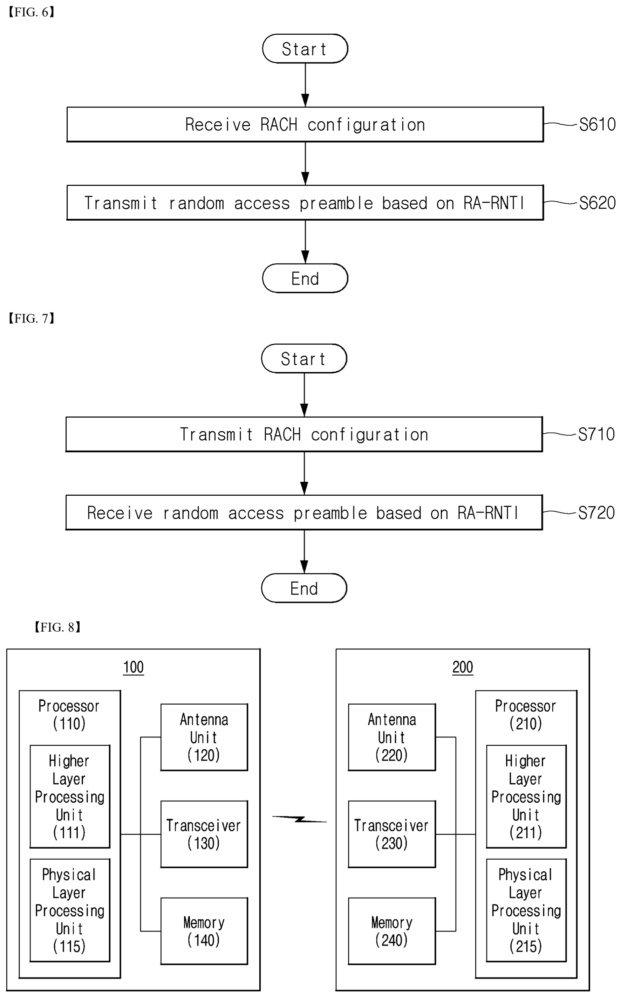

In terms of implementation, the operations (e.g., operations based on at least one of Methods 1 to 5) of the eNB/UE according to the above-described embodiments may be processed by devices (e.g., processors 110 and 210 in FIG. 8) in FIG. 8 to be described below.

Further, the operations (e.g., operations based on at least one of Methods 1 to 5) of the eNB/UE according to the above-described embodiment may be stored in memories (e.g., 140 and 240 in FIG. 8) in the form of an instruction/program (e.g., instruction or executable code) for driving at least one processor (e.g., 110 and 210 in FIG. 8).

Hereinafter, the above-described embodiments will be described in detail with reference to FIGS. 6 and 7 in terms of the operations of the UE and the eNB. Methods to be described below are just distinguished for convenience of description and it is needless to say that some components of any one method may be substituted with some components of another method or may be applied in combination with each other.

FIG. 6 is a flowchart for describing a method performed by a user equipment (UE) according to one embodiment of the present disclosure.

Referring to FIG. 6, a method performed by the UE according to one embodiment of the present disclosure includes a step of receiving an RACH (S610) and a step of transmitting a random access preamble based on an RA-RNTI (S620).

In S610, the UE receives a Random Access Channel (RACH) from the eNB.

As an example, the RACH configuration may be received based on a System Information Block (SIB) (e.g., SIB1). A BWP-uplinkCommon parameter may be configured based on the SIB. The RACH configuration may be one of RACH configurations based on the BWP-uplinkCommon parameter. As a specific example, one or more AdditionalRACH-Config parameters may be configured based on the BWP-uplinkCommon parameter. The RACH configuration may be based on one of the one or more AdditionalRACH-Config parameters. An additional RACH configuration to be described below may mean the AdditionalRACH-Config parameter.

In S620, the UE transmits a Random Access preamble to the eNB based on a Random Access-Radio Network Temporary Identifier (RA-RNTI). The transmission of the Random Access preamble may mean transmission of a Physical Random Access CHannel (PRACH)/MSG1.

As an example, the random access preamble may be transmitted based on a repetition number. The random access preamble may be transmitted based on Table 1. The random access preamble being transmitted based on the repetition number may mean that MSG1 (PRACH) transmission based on one PRACH occasion is performed a plurality of times. The repeated transmission of the PRACH may mean PRACH transmission based on a plurality of PRACH occasions. In this case, the plurality of PRACH occasions may be associated with a same Synchronization Signal/Physical Broadcast CHannel Block index (SS/PBCH Block index).

According to one embodiment, the RA-RNTI may be determined based on i) a first index related to a time domain of a Physical Random Access Channel occasion (PRACH occasion) and ii) a second index related to a frequency domain of the PRACH occasion. In this case, the PRACH occasion may be based on one of the PRACH occasions based on the repetition number. As a specific example, the PRACH occasion may be based on a last PRACH occasion among the PRACH occasions based on the repetition number (e.g., a last RO L among ROs I to L of FIG. 4). The embodiment may be based on Method 1 and/or Method 2.. The RACH configuration may be based on an Additional RACH configuration. As an example, the first index and/or the second index may be determined based on the Additional RACH configuration. As an example, the first index and/or the second index may be determined based on predefined information (e.g., N-th symbol).

The first index may be related to an Orthogonal Frequency Division Multiplexing (OFDM) symbol index. The first index may be the aforementioned s_id. The second index may be related to an index of the PRACH occasion in the frequency domain. The second index may be the aforementioned f_id.

According to one embodiment, the additional RACH configuration may include information for an offset. The second index may be determined based on the offset. The embodiment may be based on Method 1. This will be described in detail below.

As an example, the second index may be determined based on (i) the index of the PRACH occasion; and (ii) the offset. Specifically, the second index may be determined as a sum of the index of the PRACH occasion and the offset.

As an example, the index of the PRACH occasion may be determined based on the offset. That is, the second index may be the index of the PRACH occasion determined based on the offset.

As an example, the offset may be configured/defined based on a value of an msgl-FDM parameter based on the RACH configuration. The msgl-FDM parameter indicates a number of PRACH occasions that are FDM-multiplexed at one time instance. As a specific example, based on the value of the msgl-FDM parameter being 4, the offset may be configured/defined as 4. The offset may be determined/configured/indicated based on a legacy parameter (i.e., msgl-FDM parameter) based on the RACH configuration.

According to one embodiment, the information for the OFDM symbol index may be configured/indicated based on higher layer signaling. The embodiment may be based on Method 2. As an example, the information for the OFDM symbol index may be configured based on the additional RACH configuration or System Information Block (SIB) (e.g.,

SIB1).

According to one embodiment, the OFDM symbol index may be predefined for the additional RACH configuration. The embodiment may be based on Method 2. The OFDM symbol index may be based on a symbol defined among the symbols based on the PRACH occasions. The defined symbol may be an N-th symbol or a last symbol among the symbols based on the PRACH occasion. N may be a positive integer (e.g., 1, 2, ...).

The method may further include a DCI receiving step. In the DCI receiving step, the UE receives Downlink Control Information (DCI) related to a Random Access Response (RAR) from the eNB. The DCI may be based on DCI format 1_0. A Cyclic Redundancy Check (CRC) related to the DCI may be scrambled by the RA-RNTI. In other words, the UE may receive, from the eNB, DCI having the CRC scrambled by the RA-RNTI.

The operations based on S610 and S620 and the DCI receiving step described above may be implemented by devices in FIG. 8. For example, a UE 200 may control one or more transceivers 230 and/or one or more memories 240 to perform the operations based on steps S610 and S620 and the DCI receiving step.

Hereinafter, the embodiments described above will be specifically described in terms of operations of the eNB.

S710 and S720, and a DCI transmitting step described below correspond to S610 and S620, and the DCI receiving step described in FIG. 6. By considering the correspondence relationship, redundant descriptions are omitted. That is, a specific description of eNB operations described below may be replaced with the description/embodiment of FIG. 6 corresponding to the operations. As an example, the description/embodiment of 610 and S620 in FIG. 6 may be additionally applied to eNB operations of S710 and S720 described below. As an example, the description/embodiment of the UE operation in the DCI receiving step may be additionally applied to an eNB operation in a DCI transmitting step described below.

FIG. 7 is a flowchart for describing a method performed by an eNB according to another embodiment of the present disclosure.

Referring to FIG. 7, a method performed by the eNB according to another embodiment of the present disclosure includes a step of transmitting an RACH configuration (S710) and a step of receiving a random access preamble based on an RA-RNTI (S720).

In S710, the eNB transmits a Random Access CHannel (RACH) configuration to the UE.

In S720, the eNB receives a Random Access preamble from the UE based on a Random Access-Radio Network Temporary Identifier (RA-RNTI).

The RA-RNTI may be determined based on i) a first index related to a time domain of a Physical Random Access CHannel occasion (PRACH occasion) and ii) a second index related to a frequency domain of the PRACH occasion.

The method may further include a DCI transmitting step. In the DCI transmitting step, the eNB transmits Downlink Control Information (DCI) related to a Random Access Response (RAR) to the UE. A Cyclic Redundancy Check (CRC) related to the DCI may be scrambled by the RA-RNTI. In other words, the eNB may transmit, from the UE, DCI having the CRC scrambled by the RA-RNTI.

The operations based on S710 to S730 and the DCI transmitting step described above may be implemented by the devices in FIG. 8. For example, an eNB 100 may control one or more transceivers 130 and/or one or more memories 140 to perform the operations based on steps S710 to S730 and the DCI transmitting step.

A device to which one embodiment of the present disclosure is applicable (a device implementing the method/operation according to one embodiment of the present disclosure) is described below with reference to FIG. 8.

FIG. 8 illustrates configuration of a first device and a second device according to one embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) comprising:

   receiving a Random Access CHannel (RACH) configuration; and
   transmitting a random access preamble based on a Random Access (RA)-Radio Network Temporary Identifier (RNTI),
   wherein the RA-RNTI is determined based on i) a first index related to a time domain of a Physical Random Access CHannel (PRACH) occasion, and ii) a second index related to a frequency domain of the PRACH occasion,
   wherein the RACH configuration is based on an additional RACH configuration, and
   wherein the first index or the second index is determined based on the additional RACH configuration.

2. The method of claim 1, wherein the first index is related to an Orthogonal Frequency Division Multiplexing (OFDM) symbol index and the second index is related to an index of the PRACH occasion in the frequency domain.

3. The method of claim 2, wherein the additional RACH configuration includes information for an offset.

4. The method of claim 3, wherein the second index is determined based on (i) the index of the PRACH occasion and (ii) the offset.

5. The method of claim 3, wherein the index of the PRACH occasion is determined based on the offset.

6. The method of claim 2, wherein the information for the OFDM symbol index is configured based on the additional RACH configuration or a System Information Block (SIB).

7. The method of claim 2, wherein the OFDM symbol index is predefined for the additional RACH configuration.

8. The method of claim 7, wherein the OFDM symbol index is based on a defined symbol among symbols based on the PRACH occasion.

9. The method of claim 8, wherein the defined symbol is an N-th symbol or a last symbol among the symbols based on the PRACH occasion.

10. The method of claim 1, wherein the PRACH occasion is a last PRACH occasion among PRACH occasions based on a repetition number.

11. The method of claim 1, further comprising:

   receiving Downlink Control Information (DCI) related to a Random Access Response (RAR),
   wherein a Cyclic Redundancy Check (CRC) related to the DCI is scrambled by the RA-RNTI.

12. A user equipment (UE) comprising:

   one or more transceivers;
   one or more processors; and
   one or more memories connected to the one or more processors and storing instructions,
   wherein the instructions, based on being executed by the one or more processors, configure the one or more processors to perform all steps of a method according to any one of claims 1 to 11.

13. A device comprising:

   one or more memories; and
   one or more processors operably connected to the one or more memories,
   wherein the one or more memories store instructions that, based on being executed by the one or more processors, configure the one or more processors to perform all steps of a method according to any one of claims 1 to 11.

14. One or more non-transitory computer readable mediums storing instructions,
   wherein the instructions executable by one or more processors configure the one or more processors to perform all steps of a method according to any one of claims 1 to 11.

15. A method performed by a base station comprising:

   transmitting a Random Access CHannel (RACH) configuration; and
   receiving a random access preamble based on a Random Access (RA)-Radio Network Temporary Identifier (RNTI),
   wherein the RA-RNTI is determined based on i) a first index related to a time domain of a Physical Random Access CHannel (PRACH) occasion, and ii) a second index related to a frequency domain of the PRACH occasion,
   wherein the RACH configuration is based on an additional RACH configuration, and
   wherein the first index or the second index is determined based on the additional RACH configuration.

16. A base station comprising:

   one or more transceivers;
   one or more processors; and

one or more memories connected to the one or more processors and storing instructions,
wherein the instructions, based on being executed by the one or more processors, configure the one or more processors to perform all steps of a method according to claim 15.

【FIG. 1】

INITIAL CELL SEARCH — PSS/SSS& [DLRS]& PBCH — S101

SYSTEM INFORMATION RECEPTION — PDCCH/PDSCH (BCCH) — S102

RANDOM ACCESS PROCEDURE — PRACH (S103) — PDCCH/PDSCH (S104) — PUSCH (S105) — PDCCH/PDSCH (S106)

GENERAL DL/UL Tx/Rx — PDCCH/PDSCH (S107) — PUSCH/PUCCH (S108)

· DL/UL ACK/NACK
· UE CQI/PMI RI REPORT USING PUSCH AND PUCCH

【FIG. 2】

RACH slot

| 0 | 1 | 2 | 3 | 4 | 5 | 6 | 7 | 8 | 9 | 10 | 11 | 12 | 13 |
|---|---|---|---|---|---|---|---|---|---|----|----|----|----|
| A1 | A1 | A1 | A1 | A1 | A1 | A1 | A1 | A1 | A1 | A1 | A1 | Null | |
| A1 | A1 | A1 | A1 | A1 | A1 | A1 | A1 | A1 | A1 | A1/B1 | | | |
| B1 | B1 | B1 | B1 | B1 | B1 | B1 | B1 | B1 | B1 | B1 | B1 | | |
| A2 | | | | A2 | | | | A2 | | | | Null | |
| A2 | | | | A2 | | | | A2/B2 | | | | | |
| A3 | | | | | | A3 | | | | | | Null | |
| A3 | | | | | | A3/B3 | | | | | | | |
| B4 | | | | | | | | | | | | | |
| C0 | C0 | C0 | C0 | C0 | C0 | C0 | C0 | C0 | C0 | C0 | C0 | | |
| C2 | | | | | | C2 | | | | | | | |

(a) Starting OFDM symbol is '0'

RACH slot

| 0 | 1 | 2 | 3 | 4 | 5 | 6 | 7 | 8 | 9 | 10 | 11 | 12 | 13 |
|---|---|---|---|---|---|---|---|---|---|----|----|----|----|
| | Null | A1 | A1 | A1 | A1 | A1 | A1 | A1 | A1 | A1 | A1 | A1 | A1 |
| | Null | A1 | A1 | A1 | A1 | A1 | A1 | A1 | A1 | A1 | A1 | A1/B1 | |
| | Null | B1 | B1 | B1 | B1 | B1 | B1 | B1 | B1 | B1 | B1 | B1 | B1 |
| | Null | A2 | | | | A2 | | | | A2 | | | |
| | Null | A2 | | | | A2 | | | | A2/B2 | | | |
| | Null | A3 | | | | | | A3 | | | | | |
| | Null | A3 | | | | | | A3/B3 | | | | | |
| | Null | B4 | | | | | | | | | | | |
| | Null | C0 | C0 | C0 | C0 | C0 | C0 | C0 | C0 | C0 | C0 | C0 | C0 |
| | Null | C2 | | | | | | C2 | | | | | |

(b) Starting OFDM symbol is '2'

【FIG. 3】

· Contention based

(a)

· Contention-free

(b)

【FIG. 4】

【FIG. 5】

【FIG. 6】

```
            ┌─────────┐
            │  Start  │
            └─────────┘
                 │
                 ▼
┌───────────────────────────────────────┐
│       Receive RACH configuration       │──S610
└───────────────────────────────────────┘
                 │
                 ▼
┌───────────────────────────────────────┐
│ Transmit random access preamble based  │──S620
│             on RA-RNTI                  │
└───────────────────────────────────────┘
                 │
                 ▼
            ┌─────────┐
            │   End   │
            └─────────┘
```

【FIG. 7】

```
            ┌─────────┐
            │  Start  │
            └─────────┘
                 │
                 ▼
┌───────────────────────────────────────┐
│       Transmit RACH configuration      │──S710
└───────────────────────────────────────┘
                 │
                 ▼
┌───────────────────────────────────────┐
│  Receive random access preamble based  │──S720
│             on RA-RNTI                  │
└───────────────────────────────────────┘
                 │
                 ▼
            ┌─────────┐
            │   End   │
            └─────────┘
```

【FIG. 8】

## INTERNATIONAL SEARCH REPORT

| International application No. |
| --- |
| **PCT/KR2024/005594** |

| A. | CLASSIFICATION OF SUBJECT MATTER |
| --- | --- |

**H04W 74/00**(2009.01)i; **H04L 1/08**(2006.01)i; **H04W 72/0453**(2023.01)i; **H04L 5/00**(2006.01)i; **H04L 27/26**(2006.01)i; **H04W 72/0457**(2023.01)i; **H04W 74/0816**(2024.01)i

According to International Patent Classification (IPC) or to both national classification and IPC

| B. | FIELDS SEARCHED |
| --- | --- |

Minimum documentation searched (classification system followed by classification symbols)

H04W 74/00(2009.01); H04W 72/56(2023.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RA-RNTI 충돌(collision), 프리앰블 반복(preamble repetition), 레이턴시(latency), 추가적인 랜덤 액세스 채널 설정(additional RACH configuration)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2023-014761 A1 (IDAC HOLDINGS, INC.) 09 February 2023 (2023-02-09)<br>See paragraphs [0062], [0091], [0098], [0126] and [0128]; claims 1 and 7; and figure 3a. | 1-9,11-16 |
| A | | 10 |
| Y | KR 10-2023-0027102 A (FRAUNHOFER-GESELLSCHAFT ZUR FÖRDERUNG DER ANGEWANDTEN FORSCHUNG E. V.) 27 February 2023 (2023-02-27)<br>See paragraph [0263]. | 1-9,11-16 |
| Y | MODERATOR (CHINA TELECOM). FL Summary#1 on PRACH coverage enhancements. R1-2303959, 3GPP TSG RAN WG1 #112bis-e, e-Meeting. 19 April 2023.<br>See pages 13 and 36. | 2-9 |
| A | WO 2023-044025 A1 (INTEL CORPORATION) 23 March 2023 (2023-03-23)<br>See claim 1. | 1-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 August 2024** | **26 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

56

**INTERNATIONAL SEARCH REPORT**

| International application No. |
|---|
| **PCT/KR2024/005594** |

| C. | DOCUMENTS CONSIDERED TO BE RELEVANT | |
|---|---|---|
| Category* | Citation of document, with indication, where appropriate, of the relevant passages | Relevant to claim No. |
| A | US 2023-0108411 A1 (QUALCOMM INCORPORATED) 06 April 2023 (2023-04-06)<br>See claims 1-7. | 1-16 |

Form PCT/ISA/210 (second sheet) (July 2022)

**INTERNATIONAL SEARCH REPORT**
Information on patent family members

International application No.

**PCT/KR2024/005594**

| Patent document cited in search report | | | Publication date (day/month/year) | Patent family member(s) | | | Publication date (day/month/year) |
|---|---|---|---|---|---|---|---|
| WO | 2023-014761 | A1 | 09 February 2023 | BR | 112024002169 | A2 | 30 April 2024 |
| | | | | CN | 117917172 | A | 19 April 2024 |
| | | | | EP | 4381885 | A1 | 12 June 2024 |
| | | | | IL | 310620 | A | 01 April 2024 |
| | | | | KR | 10-2024-0038089 | A | 22 March 2024 |
| KR | 10-2023-0027102 | A | 27 February 2023 | CN | 115836578 | A | 21 March 2023 |
| | | | | EP | 4158984 | A1 | 05 April 2023 |
| | | | | US | 2023-0092324 | A1 | 23 March 2023 |
| | | | | WO | 2021-239895 | A1 | 02 December 2021 |
| WO | 2023-044025 | A1 | 23 March 2023 | KR | 10-2024-0063057 | A | 09 May 2024 |
| US | 2023-0108411 | A1 | 06 April 2023 | CN | 117981453 | A | 03 May 2024 |
| | | | | WO | 2023-056477 | A1 | 06 April 2023 |

Form PCT/ISA/210 (patent family annex) (July 2022)